# EUROPEAN PATENT SPECIFICATION

(11) **EP 3 063 806 B1**
(45) Date of publication and mention of the grant of the patent: **08.11.2017**
(21) Application number: 14877223.9
(22) Date of filing: 31.12.2014
(51) Int. Cl.: H01M 2/10, H01M 2/20, H01M 10/42

(54) **POWER BATTERY MODULE**
BATTERIEMODUL
MODULE DE BATTERIE D'ALIMENTATION

(30) Priority: 31.12.2013 CN 201310753892
(43) Date of publication of application: 07.09.2016
(73) Proprietor: BYD Company Limited, Shenzhen 518118 (CN)
(72) Inventor: PENG, Qingbo, Shenzhen Guangdong 518118 (CN); LU, Jia, Shenzhen Guangdong 518118 (CN); ZHANG, Xuefeng, Shenzhen Guangdong 518118 (CN); LIU, Wei, Shenzhen Guangdong 518118 (CN); HUANG, Yan, Shenzhen Guangdong 518118 (CN); ZHU, Yan, Shenzhen Guangdong 518118 (CN); LU, Zhipei, Shenzhen Guangdong 518118 (CN); ZHU, Jianhua, Shenzhen Guangdong 518118 (CN)
(74) Representative: Hoffmann Eitle
(86) International application number: PCT/CN2014/095829
(87) International publication number: WO 2015/101321

(56) References cited:
- CN-A- 101 944 580
- CN-U- 202 839 812
- CN-U- 202 839 812
- CN-Y- 201 303 033
- US-A1- 2005 110 458
- US-A1- 2008 160 395
- US-A1- 2011 076 521
- US-A1- 2012 052 359
- US-A1- 2013 252 045

## Description

### FIELD

Embodiments of the present disclosure generally relate to a battery field, and more particularly, to a power battery module.

### BACKGROUND

In the related art, most of the power battery modules adopt a battery accommodating assembly with a multi-plate structure or an upper-lower housing structure. Although these structures can protect the battery well, a combination mode of the batteries cannot be expanded and developed freely due to the limitations of the multi-plate structure and the upper-lower housing structure. When the combination mode of the batteries is needed to be changed, it is necessary to redesign and redevelop a new combination manner of the batteries, such that it will waste a lot of time and greatly increase the cost. Also, the battery accommodating assemblies with the multi-plate and upper-lower housing structures are not suitable to an automatic production of the power battery module, thus increasing the cost of the power battery module. Examples of power battery modules can be seen in documents US 2013/252045 A1, US 2008/160395 A1 and US 2012/052359 A1. Examples of connection assemblies for batteries can be seen in documents CN 201 303 033 Y and US 2005/110458 A1.

### SUMMARY

Embodiments of the present disclosure seek to solve at least one of the problems existing in the related art to at least some extent.

Accordingly, an object of the present disclosure is to provide a power battery module which can freely expand a number of batteries and be adapted to different connection manners of the batteries according to an actual requirement.

Embodiments of a broad aspect of the present disclosure provide a power battery module, including: a battery accommodating assembly having a plurality of separators, a battery group and a signal collection and power connection assembly. The separator includes: a separator body having a front portion defining a front accommodating groove and a rear portion; a left cover disposed at a left end of the separator body; and a right cover disposed at a right end of the separator body, in which adjacent separators are detachably connected with each other, and the front accommodating groove of one of the adjacent separators and the rear portion of the separator body of the other of adjacent separators defines a battery chamber. The battery group includes a plurality of batteries which are accommodated in the battery chambers correspondingly, and the battery has an electrode terminal. The signal collection and power connection assembly mounted on the separator and includes: a substrate; a power connection member fixed to the substrate and connected with the electrode terminal; a power connection line which is formed by a first sheet-like conductive element disposed on the substrate and defines a first end connected with the power connection member and a second end; a signal collection line which is formed by a second sheet-like conductive element disposed on the substrate and defines a first end connected with the power connection member and a second end; and a signal collection member disposed on the substrate and connected with the signal collection line. The signal collection and power connection assembly further comprises a common line formed by a third sheet-like conductor disposed on the substrate, wherein the common line has a first end coupled with the power connection member and a second end coupled with the first ends of the power connection line and the signal collection line respectively.

With the adjacent separators defining the battery chamber to accommodate the battery and the plurality of separators connected with one another detachably, the power battery module according to embodiments of the present disclosure can freely expand a number of batteries and be adapted to different connection manners of the batteries (such as a series connection, a parallel connection and a series-parallel connection) according to an actual requirement. Also, the left and right covers are disposed at the ends of each separator so as to protect the separator and the battery within the separator. Meanwhile, since the power connection line and the signal collection line are formed by the sheet-like conductive element on the substrate, it avoids using a wire to perform the signal transmission and the power connection. The signal collection and power connection assembly is easy to be manufactured and can be wildly used in different conditions, such that when a new kind of signal is requested to be collected during a usage of the battery, it is convenient to add a corresponding signal collection member without adjusting the whole signal collection and power connection assembly, thus providing a great convenience and reliability.

In addition, the signal collection and power connection assembly according to embodiments of the present disclosure integrates the power connection line, the signal collection line, the power connection member and the signal collection member on the substrate. Thus, the signal collection and power connection assembly has a small size, a light weight, a low cost and is easy to be manufactured and assembled, and increases the assembly efficiency and is adapted to the automatic production. The single collection and power connection assembly combines functions of signal and power transmissions, so that the operation of the single collection and power connection assembly is convenient. In addition, the single collection and power connection assembly has a simple structure and various fastening manners, thus providing a wide scope of application.

With the power battery module according to embodiments of the present disclosure, an operation of providing additional power connection members for the power connection between the batteries can be omitted. In an assembling process of the power battery module, after arranging the batteries, the signal collection and power connection assembly is disposed on the power battery module and the battery terminals of the batteries are connected with the power connection member of the signal collection and power connection member. Furthermore, compared with the conventional power connection member, the signal collection and power connection assembly according to embodiments of the present disclosure is relative flexible, such that a buffering structure required to be disposed during a manufacture process of the conventional power connection member is not needed herein, thus facilitating the manufacture and saving the cost. Also, the power connection part and the signal collection part in the power battery module according to embodiments of the present disclosure are formed integrally so as to improve the assembling reliability of the power battery module.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the accompanying drawings, in which:
Fig. 1 is a schematic view of an assembled power battery module according to an embodiment of the present disclosure;
Fig. 2 is a schematic view of the power battery module shown in Fig. 1 from another direction;
Fig. 3 is a schematic view showing an assembling relationship between a battery accommodating assembly and a battery shown in Fig. 1;
Fig. 4 is a schematic view showing an assembling relationship between the separators of a power battery module shown in Fig. 1;
Fig. 5 is an enlarged view of region A in Fig. 4;
Fig. 6 is a perspective view of a separator of the power battery module as shown in Fig. 1;
Fig. 7 is a schematic view of a power battery module according to another embodiment of the present disclosure;
Fig. 8 is a schematic view of the power battery module as shown in Fig.7 without left and right covers;
Fig. 9 is a schematic view showing an assembling relationship between a battery accommodating assembly and a battery according to a further embodiment of the present disclosure;
Fig. 10 is an enlarged view of region B shown in Fig. 9;
Fig. 11 is a perspective view of a separator in the power battery module as shown in Fig. 9;
Fig. 12 is a schematic view showing a assembling relationship between a separator and an insulating plate or a heat conducting plate of the battery accommodating assembly shown in Fig. 9;
Fig. 13 is a perspective view of a snap-fit pin of the power battery module shown in Fig. 9;
Fig. 14 is an enlarged view of region C shown in Fig. 13;
Fig. 15 is a schematic view of a signal collection and power connection assembly of a power battery module according to an embodiment of the present disclosure;
Fig. 16 is a partially enlarged schematic view of Fig. 15;
Fig. 17 is a schematic view of a battery of a power battery module according to an embodiment of the present disclosure;
Fig. 18 is a schematic view of a power battery module according to an embodiment of the present disclosure; and
Fig. 19 is a schematic view of a signal collection and power connection assembly of a power battery module according to an embodiment of the present disclosure.

### DETAILED DESCRIPTION

Reference will be made in detail to embodiments of the present disclosure. The same or similar elements and the elements having same or similar functions are denoted by like reference numerals throughout the descriptions. The embodiments described herein with reference to drawings are explanatory, illustrative, and used to generally understand the present disclosure. The embodiments shall not be construed to limit the present disclosure.

In the specification, unless specified or limited otherwise, relative terms such as "central", "longitudinal", "lateral", "front", "rear", "right", "left", "inner", "outer", "lower", "upper", "horizontal", "vertical", "above", "below", "up", "top", "bottom" ,"inner", "outer", "clockwise", "anticlockwise" as well as derivative thereof (e.g., "horizontally", "downwardly", "upwardly", etc.) should be construed to refer to the orientation as then described or as shown in the drawings under discussion. These relative terms are for convenience of description and do not require that the present disclosure be constructed or operated in a particular orientation.

In addition, terms such as "first" and "second" are used herein for purposes of description and are not intended to indicate or imply relative importance or significance. Thus, features limited by "first" and "second" are intended to indicate or imply including one or more than one these features. In the description of the present disclosure, "a plurality of" relates to two or more than two.

In the description of the present disclosure, unless specified or limited otherwise, it should be noted that, terms "mounted," "connected" "coupled" and "fastened" may be understood broadly, such as permanent connection or detachable connection, electronic connection or mechanical connection, direct connection or indirect connection via intermediary, inner communication or interreaction between two elements. These having ordinary skills in the art should understand the specific meanings in the present disclosure according to specific situations.

In the description of the present disclosure, a structure in which a first feature is "on" a second feature may include an embodiment in which the first feature directly contacts the second feature, and may also include an embodiment in which an additional feature is formed between the first feature and the second feature so that the first feature does not directly contact the second feature, unless otherwise specified. Furthermore, a first feature "on," "above," or "on top of" a second feature may include an embodiment in which the first feature is right "on," "above," or "on top of" the second feature, and may also include an embodiment in which the first feature is not right "on," "above," or "on top of" the second feature, or just means that the first feature has a sea level elevation larger than the sea level elevation of the second feature. While first feature "beneath," "below," or "on bottom of" a second feature may include an embodiment in which the first feature is right "beneath," "below," or "on bottom of" the second feature, and may also include an embodiment in which the first feature is not right "beneath," "below," or "on bottom of" the second feature, or just means that the first feature has a sea level elevation smaller than the sea level elevation of the second feature.

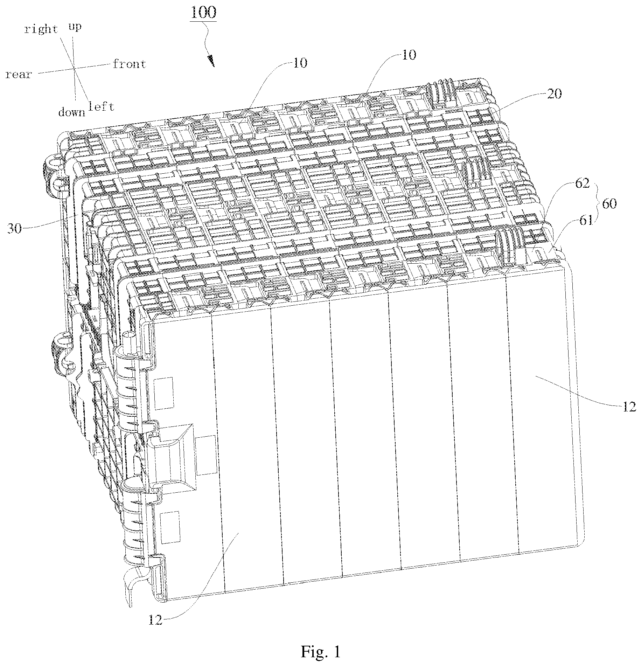

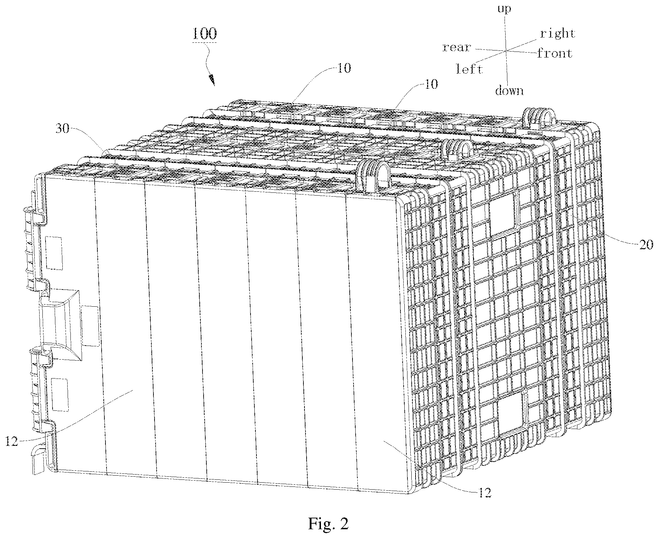

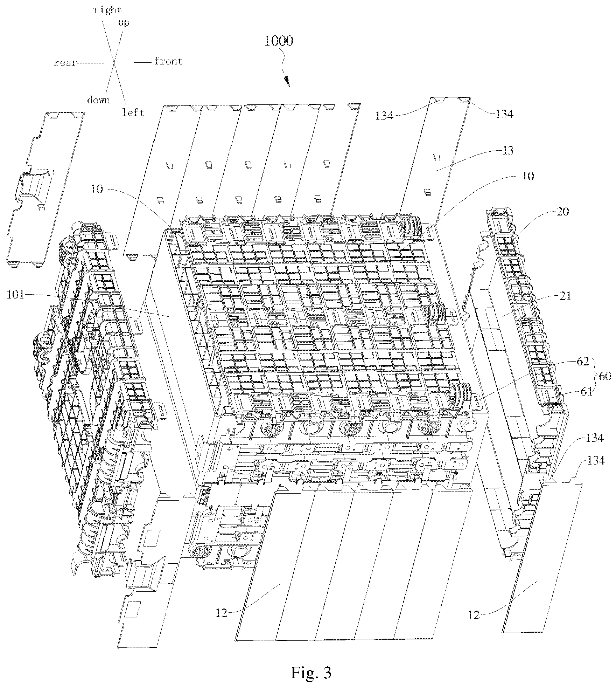

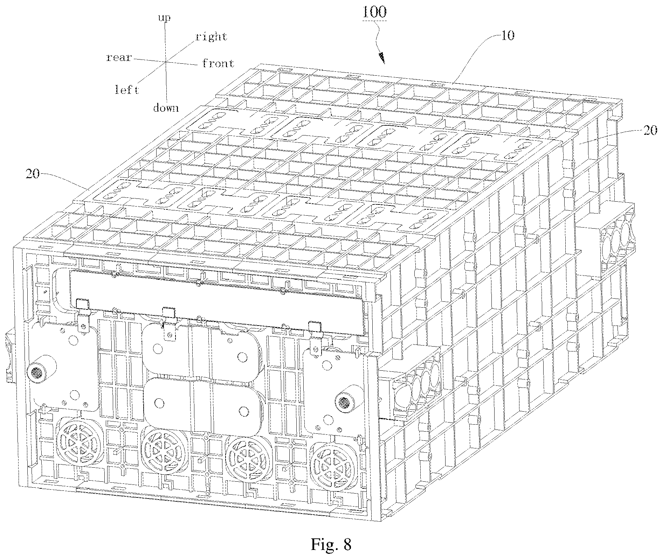

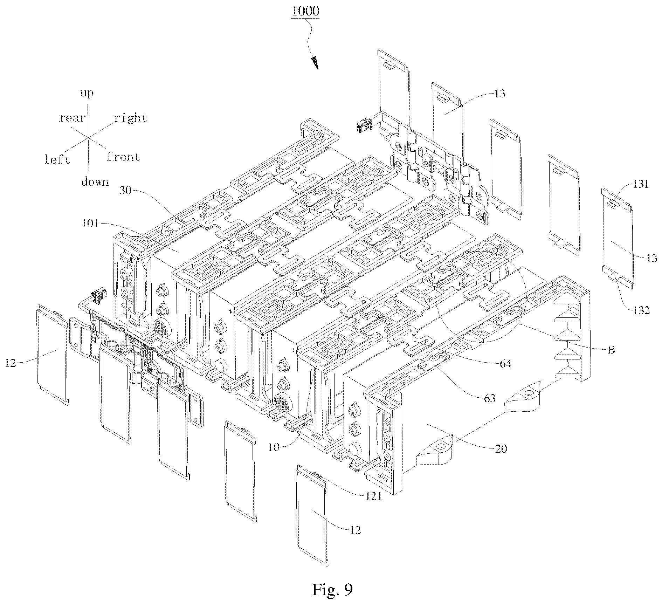

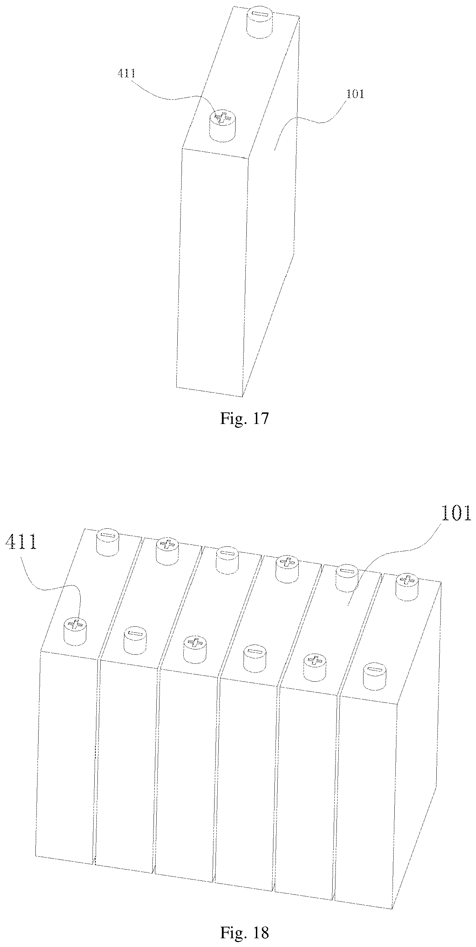

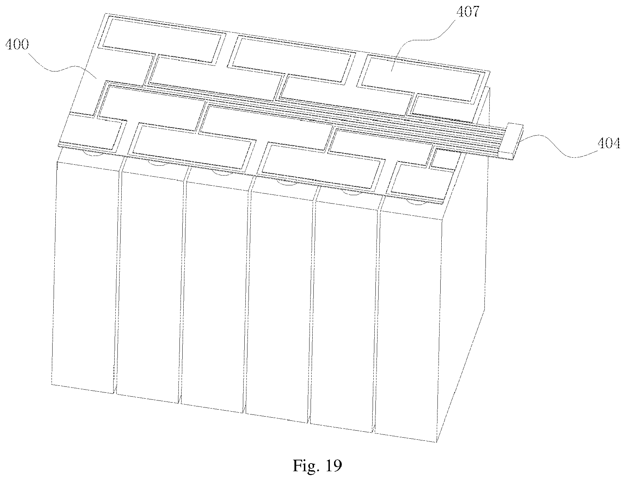

A power battery module 1000 according to embodiments of the present disclosure will be described in the following with reference to Figs. 1-19. The power battery module 1000 serves as a power source of an electric vehicle, such that the performance and safety thereof become significant factors for the whole electric vehicle.

As shown in Figs. 1-19, the power battery module 1000 according to embodiments of the present disclosure includes: a battery accommodating assembly 100, a battery group, a signal collection and power connection assembly 400.

The battery accommodating assembly 100 has a plurality of separators 10, and each of the separators 10 includes a separator body 11, a left cover 12 and a right cover 13. The separator body 11 defines a front portion and a rear portion opposing to each other, and a front accommodating groove 14 is formed in the front portion of the separator body 11. Specifically, the front accommodating groove is configured to extend backward from the front portion of the separator body 11. In some embodiments of the present disclosure, the plurality of separators is disposed parallel with each other in a rear-front direction.

A left cover 12 is disposed at a left end of the separator body 11, and a right cover 13 is disposed at a right end of the separator body 11. Adjacent separators 10 are detachably connected with each other, and the front accommodating groove 14 of one of the adjacent separators 10 and the rear portion of the separator body 11 of the other of adjacent separators 10 defines a battery chamber.

The battery group includes a plurality of batteries 101 which are accommodated in the battery chambers correspondingly, i.e. one battery 101 is accommodated in one battery chamber, and each of the batteries 101 has an electrode terminal 411.

The signal collection and power connection assembly 400 is mounted on the separator 10 and includes: a substrate 401, a power connection member 407, a power connection line 4071, a signal collection line 4021 and a signal collection member 402.

Specifically, the power connection member 407 is fixed to the substrate 401 and is connected with the electrode terminal 411. The power connection line 4071 is formed by a first sheet-like conductive element disposed on the substrate 401 and defines a first end connected with the power connection member 407 and a second end. The signal collection line 4021 is formed by a second sheet-like conductive element disposed on the substrate 401 and defines a first end connected with the power connection member 407 and a second end. And the signal collection member 402 is disposed on the substrate 401 and is connected with the second end of the signal collection line 4021.

Since the adjacent separators 10 are detachably connected with each other, any number of separators 10 can be connected together according to an actual requirement, such that any number of batteries 101 can be adopted to satisfy requirements of the power battery modules 1000 having different parameters, i.e. the power battery module 1000 can be freely expanded and developed according to the actual requirement. For example, a capability of accommodating the battery 101 of the power accommodating assembly 100 can be improved by increasing a number of the separators 10. In other words, by increasing the number of the separators 10, a number of the battery chambers in the power battery module 1000 can also be increased, so that more accommodating space can be provided for the additional batteries 101 in the power battery module 1000.

Accordingly, with the adjacent separators 10 defining the battery chamber configured to accommodate the battery 101 and connected with each other detachably, the power battery module 1000 according to embodiments of the present disclosure can freely expand the number of the batteries 101 and be adapted to different connection manners of the batteries (such as a series connection, a parallel connection and a series-parallel connection of the batteries 101) according to an actual requirement. Also, the left cover 12 and the right cover 12 are disposed at the ends of the separator 10 correspondingly so as to protect the separators 10 and the battery 101 within the separators 10. Meanwhile, since the power connection line 4071 and the signal collection line 4021 are formed by the sheet-like conductive element on the substrate 401, it avoids using a wire to perform the signal transmission and the power connection. The signal collection and power connection assembly 400 is easy to be manufactured and can be wildly used in in different conditions, such that when a new kind of signal is requested to be collected during a usage of the battery, it is convenient to add the signal collection member without adjusting the whole signal collection and power connection assembly 400, thus providing a great convenience and reliability.

In addition, the signal collection and power connection assembly 400 according to embodiments of the present disclosure integrates the power connection line 4071, the signal collection line 4021, the power connection member 407 and the signal collection member 402 on the substrate 401. Thus, the signal collection and power connection assembly 400 has a small size, a light weight, a low cost and is easy to be manufactured and assembled, and increasing the assembly efficiency and is adapted to the automatic production. The single collection and power connection assembly 400 combines functions of signal and power transmissions, so that the operation of the single collection and power connection assembly 400 is convenient. In addition, the single collection and power connection assembly 400 has a simple structure and various fastening manners, thus providing a wide scope of application.

With the power battery module 1000 according to embodiments of the present disclosure, an operation of providing additional power connection members for the power connection between the batteries 101 can be omitted. In an assembling process of the power battery module, after arranging the batteries 101, the signal collection and power connection assembly 400 is disposed on the power battery module and the battery terminals 411 of the batteries 101 are connected with the power connection member 407 of the signal collection and power connection assembly 400. Furthermore, compared with the conventional power connection member, the signal collection and power connection assembly 400 according to embodiments of the present disclosure is relative flexible, such that a buffering structure required to be disposed during a manufacture process of the conventional power connection member is not needed for the signal collection and power connection assembly 400 of the present disclosure, thus facilitating the manufacture and saving the cost. Also, the power connection part and the signal collection part in the power battery module 1000 according to embodiments of the present disclosure are formed integrally so as to improve the assembling reliability of the power battery module.

In some embodiments of the present disclosure, a through hole may be formed in at least one of left and right walls of the battery chamber. The through hole serves as an exit for an electrode passing through the battery chamber, and positive and negative electrodes of the battery 101 can be extended out via the through hole so as to facilitate a connection between the batteries 101. Or the through hole may serve as a positioning hole 621 of an anti-explosion valve or an injection hole (an anti-explosion liquid may be injected into the battery chamber via the injection hole), i.e. a function of the through hole can be determined according to the actual requirement so as to facilitate a function development of the power battery module 1000.

Alternatively, two notches opposed to each other may be formed in adjacent separators 10 respectively and the two notches define the through hole. In an embodiment of the present disclosure, a cross-section of the through hole may be a circular, an ellipse, a polygon or an irregular shape.

Alternatively, a plurality of through holes are arranged and spaced from one another in an up-down direction, i.e. a plurality of the notches may be formed in one separator 10 and spaced from one another in the up-down direction.

Specifically, the front accommodating groove 14 is configured to extend backward from the front portion of the separator body 11. A front notch 141 is formed in at least one of left and right walls of the front accommodating groove 14, and the front accommodating groove 14 of one of the adjacent separators 10 and the rear portion of the separator body 11 of the other of adjacent separators 10 define the battery chamber. And the front notch 141 of one of the adjacent separators 10 and the rear portion of the separator body 11 of the other of adjacent separators 10 define the through hole. In other words, an accommodating groove of the battery 101 is merely formed in the front portion of each separator 10, and the front accommodating groove 14 and the rear portion of the adjacent separator 10 define the battery chamber to accommodate the battery 101. Thereby, the separator 10 has a simpler structure and is easily to be manufactured.

In some embodiments, the rear portion of each separator may define a rear accommodating groove, and a rear notch 151 corresponding to the front notch 141 may be formed in at least one of left and right walls of the rear accommodating groove. The battery chamber may be defined by the front accommodating groove 14 of one of the adjacent separators 10 and the rear accommodating groove of the other of the adjacent separators 10, and the through-hole may be defined by the front notch 141 of one of the adjacent separators 10 and the rear notch 151 of the other of the adjacent separators 10. Therefore, the chamber battery is defined by the front accommodating groove 14 and the rear accommodating groove to have more space for accommodating the battery 101. Structures of the front and rear portions of each separator 10 may be identical with each other, such that the separator can have a symmetrical structure.

Alternatively, the front notch 141 and the rear notch 151 may be configured as a semicircle, and thus the through hole defined by the front notch 141 and the rear notch 151 can have a circular cross-section. In an embodiment of the present disclosure, each of the plurality of separators 10 may have a same structure, such that the plurality of separators 10 can be manufactured by a same set of mold, thus saving the cost and facilitating the assembling and quantity production of the power battery module 1000.

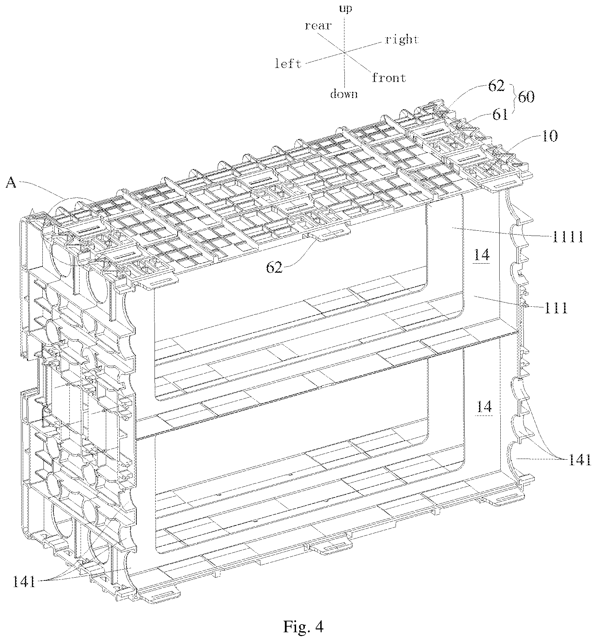

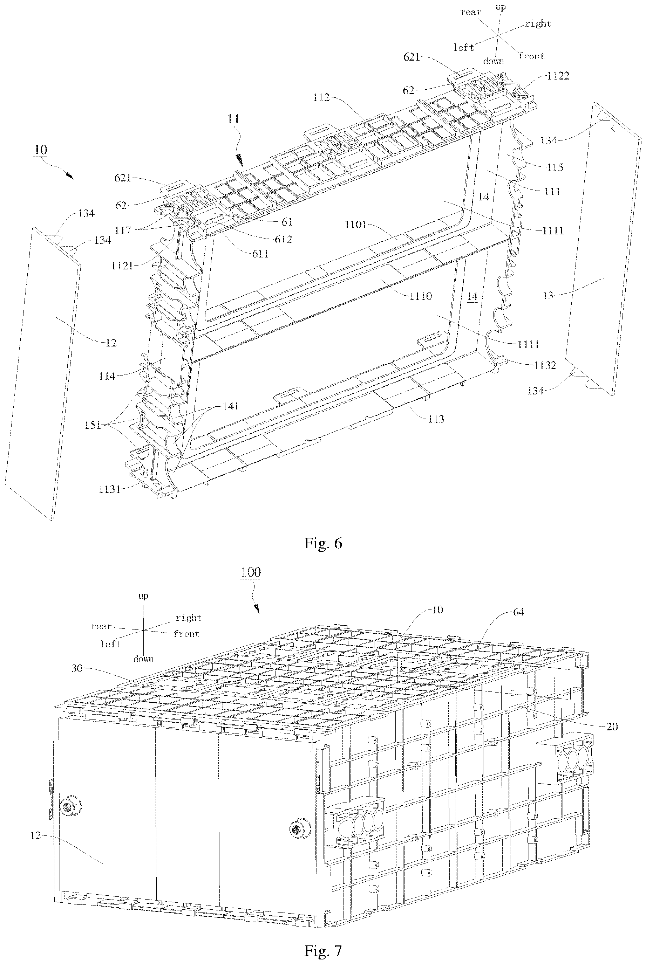

As shown in Figs. 4 and 6, each of the separators 10 includes two front accommodating grooves 14 arranged along the up-down direction and two rear accommodating grooves arranged along the up-down direction and in one to one correspondence to the front accommodating grooves 14. The two front accommodating grooves 14 are separated from each other by a front separating plate 1110, and the two rear accommodating grooves are separated from each other by a rear separating plate 1101. Therefore, two battery chambers are formed between the two separators 10 to accommodate two batteries 101, thus further improving the capability of the battery accommodating assembly 100 to accommodate the battery 101 and the structure of the power battery module 1000 is compact. It can be understood by those skilled in the related art that the two battery chambers formed between the two adjacent separators 10 and spaced from each other in the up-down direction are just exemplary, and not limited. In other words, more battery chambers may be formed between adjacent separators, such as three or more than three, and thus more batteries 101 can be disposed in the battery accommodating assembly 100, such that the power battery module 1000 is easy to be used and has a high expansibility. In an embodiment of the present disclosure, the front separating plate 1110 and rear separating plate 1101 corresponding to each other are formed integrally.

As shown in Figs. 6, 11 and 12, the separator 11 includes a vertical plate 111, an upper frame plate 112, a lower frame plate 113, a left plate 114 and a right plate 115. The upper frame plate 112 is disposed at a top edge of the vertical plate 111, the lower frame plate is disposed at a bottom edge of the vertical plate 111, the left plate 114 is disposed at a left end of the vertical plate 111 and defines an upper end connected with the upper frame plate 112 and a lower end connected with the lower frame plate 113, and the right plate 115 is disposed at a right end of the vertical plate 111 and defines an upper end connected with the upper frame plate 112 and a lower end connected with the lower frame plate 113.

Each of the front accommodating groove 14 and the rear accommodating groove is defined by the vertical plate 111, the upper frame plate 112, the lower frame plate 113, the left plate 114 and the right plate 115. Thereby, the separator body 11 has a simple structure and is easy to manufacture. In an embodiment of the present disclosure, the separator 10 may be formed integrally, i.e. the vertical plate 111, the upper frame plate 112, the lower frame plate 113, the left plate 114 and the right plate 115 may be formed integrally, such that a connection strength between the vertical plate 111, the upper frame plate 112, the lower frame plate 113, the left plate 114 and the right plate 115 is improved, thus improving a structure strength of the separator 10. Furthermore, a protection of the battery accommodating assembly 100 for the battery 101 is improved.

Alternatively, the front notch 141 may be formed in a front edge of each of the left plate 114 and the right plate 115, and the rear notch 151 may be formed in a rear edge of each of the left plate 114 and the right plate 115. In other words, the through hole may be formed in both left and right sides of the battery chamber, such that the electrode of the battery 101 can be extended out of the battery chamber via a left through hole or a right through hole. The positions of the positioning hole 621 of the anti-explosion valve, the injection hole and the through hole for the electrode can be arranged according to the structure of the battery 101. A plurality of the front notches 141 are arranged and spaced from one another in the up-down direction, and a plurality of the rear notches 151 are arranged and spaced from one another in the up-down direction, i.e. a plurality of though holes are formed in both the left and right sides of the battery chamber.

In addition, when the power battery module 1000 works normally, a gap may be formed between a peripheral wall of the battery chamber and the battery 101, such that the battery 101 can be cooled by air within the power battery 1000. When there is a abnormal condition occurred in the battery 101 of the power battery module 1000, for example when the battery 101 is swollen, the gap between the peripheral wall of the battery chamber and the battery 101 can tolerate the deformation of the battery 101 in a thickness direction, thus improving the safety of the power battery module 1000.

An annular step 142 is disposed on a bottom wall of at least one of the front accommodating groove 14 and the rear accommodating groove. In an embodiment of the present disclosure, the annular step 142 is disposed on the bottom wall of each of the front accommodating groove 14 and the rear accommodating groove. By disposing the annular step 142, the bottom wall of each front accommodating groove 14 and the rear accommodating groove can be separated from an outer surface of the battery 101, thus ensuring the gap between peripheral wall of the battery chamber and the battery 101.

Alternatively, a surface of the bottom wall of at least one of the front accommodating groove 14 and rear accommodating groove is inclined downward from a periphery of the bottom wall to a center of the bottom wall. In an embodiment of the present disclosure, the surface of the bottom wall of each of the front accommodating groove 14 and rear accommodating groove is inclined downward from the periphery of the bottom wall to the center of the bottom wall, thus ensuring the gap between peripheral wall of the battery chamber and the battery 101. It should be noted that, the surface of the bottom wall of each front accommodating groove 14 and rear accommodating groove may be a surface of the vertical plate 111.

In order to meet a requirement of safety and reliability, the separator 10 may be made of an engineering plastic and a composite material having a high strength, a high corrosion resistance, a great weather fastness, a good fire resistance and a high insulativity, such as PPO (Poly Phenylene Oxide), PP (Poly Propylene), PET (Polyethylene Glycol Terephthalate), ABS (Acrylonitrile Butadiene Styrene), PC (Poly Carbonate) or these materials embedded with metal therein. Thereby, the separator 10 according to embodiments of the present disclosure has the high strength and can protect the battery 101 effectively in abnormal conditions, such as a collision occurred to the power battery module 1000. For example, the separator body 11 may be formed by overall injection molding, and the metal may be embedded into these materials during the injection molding, so that the structure strength of the separator 10 is further improved. Moreover, the separator 10 may be demoulded directly after the injection molding, so that it is convenient for manufacture and the cost is saved.

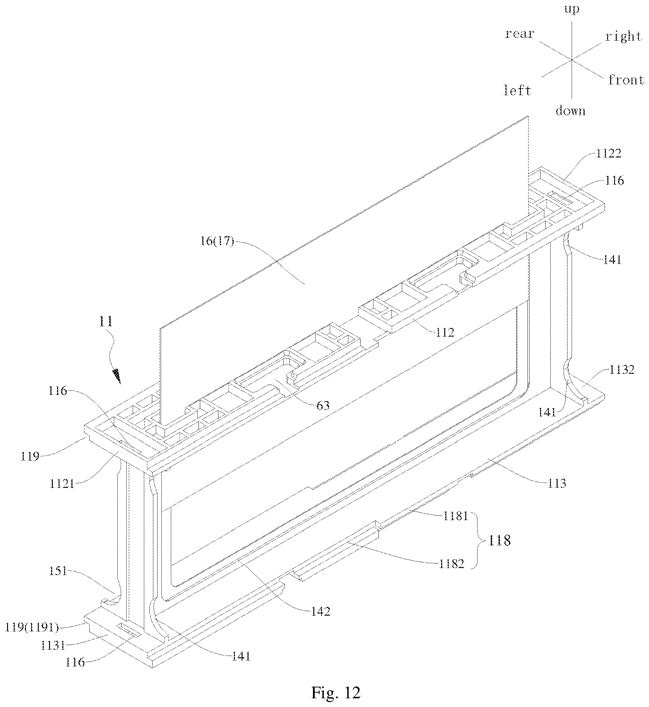

As shown in Fig. 12, a front step 118 is disposed at a front side edge of each of the upper frame plate 112 and the lower frame plate 113, and a rear step 119 is disposed at a rear side edge of each of the upper frame plate 112 and lower frame plate 113. When the plurality of separators 10 are assembled together, the front step 118 disposed at the front side edge of the upper frame plate 112 of one of the adjacent separators 10 is lapped with the rear step 119 disposed at the rear side edge of the upper frame plate 112 of the other one of the adjacent separators 10. Similarly, the front step 118 disposed at the front side edge of the lower frame plate 113 of one of the adjacent separators 10 is lapped with the rear step 119 disposed at the rear side edge of the lower frame plate 113 of the other one of the adjacent separators 10. Thus, an appearance of the battery accommodating assembly 100 is aesthetic, and adjacent separators 10 can be closely connected with each other. Moreover, the assembling efficiency of the power battery module 1000 is improved and the manufacture cost of the power batter module 1000 is reduced. In an embodiment of the present disclosure, the front step 118 may face downward and the rear step 119 may face upward, such that the corresponding front step 118 and rear step 119 can be fitted with each other better.

In an embodiment of the present disclosure as shown in Fig. 12, the front step 118 includes a first front step segment 1181 facing downwards and a second front step segment 1182 facing upwards, and the rear step 119 includes a first rear step segment facing upwards and corresponding to the first front step segment 1181 and a second rear step segment 1191 facing downwards and corresponding to the second front step segment 1182. Thereby, the adjacent separators 10 can be assembled with each other closer, so that a better assembly effect can be implemented. Moreover, by dividing the front step 118 and the rear step 119 into two segments respectively, the adjacent separators 10 can be assembled together and positioned with respect to each other due to a connection between the front step 118 and the rear step 119, and the connection between the adjacent separators 10 is stably.

In some embodiments of the present disclosure, a window 1111 may be formed in the vertical plate 111 to communicate the front accommodating groove 14 with the rear accommodating groove, i.e. the front accommodating groove 14 and the rear accommodating groove are communicated with each other. In other words, the vertical plate 111 is configured as a structure penetrated therethrough in the front-rear direction, thus saving a manufacture material and reducing the cost.

An insulating plate 16 or a heat conducting plate 17 may be disposed in the window 1111. By disposing the insulating plate 16, insulativity between adjacent batteries 101 can be improved, so that a safety performance of the power battery module 1000 can be increased. By disposing the heat conducting plate 17, the radiation effect of the battery 101 within the battery chamber can be improved, thus, the safety performance of the power battery module 1000 can also be increased and a working life of the battery 101 can be lengthened.

Specifically, an insertion hole is formed in the upper frame plate 112, and an inserting groove aligned with the inserting hole is formed in the vertical plate 111, and the insulating plate 16 or the heat conducting plate 17 is inserted into the window 1111 via the insertion hole and the inserting groove.

As shown in Figs. 1-3, 6, 7, 9 and 11, in some embodiments of the present disclosure, the left cover 12 and the right cover 13 can be formed with the separator body 11 integrally, such that a connection strength between the separator body 11 and the left cover 12 and the right cover 13 is improved, and a complex assembly process of the left cover 12 and the right cover 13 can be avoided, thus increasing an assembling speed.

Certainly, the present disclosure according to embodiments of the present disclosure is not limited to this, the left cover 12 and the right cover 13 may be detachably disposed on the separator 11 respectively. In other words, the separator 11, the left cover 12 and the right cover 13 may be produced independently, and then the left cover 12 and the right cover 13 are disposed on the separator 11 via a connection structure. Thereby, when one of the separator 11, the left cover 12 and the right cover 13 is damaged, it is just required to replace the corresponding one without replacing the whole assembly, thus facilitating maintenance and saving a cost thereof.

In an embodiment of the present disclosure as shown in Fig. 6, a snapping slot 117 may be formed in the separator body 11, and a clasp 134 snapped in the snapping slot 117 may be disposed on the left cover 12 and the right cover 13 respectively. By snapping the clasp 134 within the snapping slot 117, the left cover 12 and the right cover 13 are disposed on the separator body 11 respectively, such that the connections between the left cover 12 and the separator 10 and the right cover 13 and the separator 10 are simple. As shown in Fig. 6, the clasp 134 may be disposed on upper and lower ends of each of the left cover 12 and the right cover 13, such that the left cover 12 and the right cover 13 can be disposed on the separator body 11 stably.

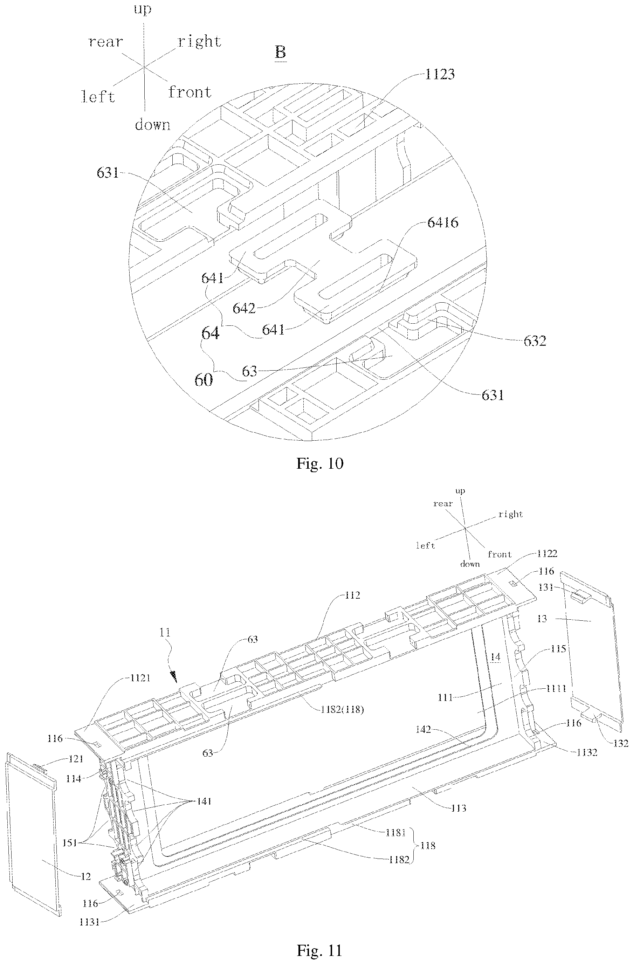

In another embodiment of the present disclosure as shown in Fig. 11, a left end of the upper frame plate 112 is extended leftward beyond the left plate 114 so as to form a left-upper extending part 1121, a left end of the lower frame plate 113 is extended leftward beyond the left plate 114 so as to form a left-lower extending part 1131, a right end of the upper frame plate 112 is extended rightward beyond the right plate 115 so as to form a right-upper extending part 1122, and a right end of the lower frame plate 113 is extended rightward beyond the right plate 115 so as to form a right-lower extending part 1132. Moreover, the snapping slot 116 is formed in each of the left-upper extending part 1121, the left-lower extending part 1131, the right-upper extending part 1122 and the right-lower extending part 1132. Correspondingly, a left-upper clasp 121 snapped in the snapping slot 116 of the left-upper extending part 1121 and a left-lower clasp snapped in the snapping slot 116 of the left-lower extending part 1131 are disposed on a right surface of the left cover 12, and a right-upper clasp 131 snapped in the snapping slot 116 of the right-upper extending part 1122 and a right-lower clasp 132 snapped in the snapping slot 116 of the right-lower extending part 1132 are disposed on a left surface of the right cover 13. Therefore, it is more convenient to dispose the left cover 12 and the right cover 13 on the separator 10.

As shown in Fig. 11, the left-upper clasp 121 and the left-lower clasp may be disposed on a right surface of the left cover 12, and the right-upper clasp 131 and the right-lower clasp 132 may be disposed on a left surface of the right cover 13, such that a structure strength of each of the left-upper clasp 121, the left-lower clasp, the right-upper clasp 131 and the right-lower clasp 132 are improved.

Alternatively, the left cover 12 and the right cover 13 have a width in a front-rear direction larger than or equal to a width of the left plate 114 and the right plate 115 in the front-rear direction, and less than or equal to a width of the upper frame plate 112 and the lower frame plate 113 in the front-rear direction. When the left cover 12 and the right cover 13 have the width in the front-rear direction larger than the width of the left plate 114 and the right plate 115 in the front-rear direction, a gap may be formed between the left plates 114 of the adjacent separators 10 and between the right plates 115 of the adjacent separators 10, because the left cover 12 or the right cover 13 can cover the gap between the left plates 114 or between the right plates 115. When the left cover 12 and the right cover 13 have the width in the front-rear direction equal to the width of the left plate 114 and the right plate 115 in the front-rear direction, the left plates 114 of the adjacent separators 10 are closely contacted with each other and the right plates 115 of the adjacent separators 10 are closely contacted with each other, such that the left plate 114, the righty plate 115, the left cover 12 or the right cover 13 can protect the battery 101 properly.

In order to meet a requirement of safety and reliability of the left cover 12 and the right cover 13, the left cover 12 and the right cover 13 may be made of an engineering plastic and a composite material having a high strength, a high corrosion resistance, a great weather fastness, a good fire resistance and a high insulativity, such as PPO (Poly Phenylene Oxide), PP (Poly Propylene), PET (Polyethylene Glycol Terephthalate), ABS (Acrylonitrile Butadiene Styrene), PC (Poly Carbonate) or these materials embedded with metal therein. Thereby, the left cover 12 and the right cover 13 have the high strength, the high corrosion resistance and the good fire resistance, and can protect the battery 101 effectively in abnormal conditions, such as a collision occurred to the power battery module 1000.

As shown in Figs. 1-3 and 7-9, in some embodiments of the present disclosure, the battery accommodating assembly 100 further includes a front plate 20. The front plate 20 defines a rear groove 21 in a rear side surface thereof. The rear groove 21 of the front plate 20 and the front accommodating groove 14 of the frontmost separator 10 of the plurality of separators 10 define the frontmost battery chamber. The front plate 20 is snapped with the frontmost separator 10, alternatively the front plate 20 may be snapped with the frontmost separator 10 via a snapping structure 60. The front plate 20 may not define a groove in a front side thereof, such that front plate 20 has a simple structure and is easy to be manufactured, thus saving materials and space.

Correspondingly, the battery accommodating assembly 100 further includes a rear plate 30. The rear plate 30 defines a front groove in a front side surface thereof. The front groove and the rear accommodating groove of the rearmost separator of the plurality of separators 10 define the rearmost battery chamber. The rear plate 30 is snapped with the rearmost separator 10, alternatively the rear plate 30 may be snapped with the rearmost separator 10 via the above snapping structure 60. The rear plate 30 may not define a groove in a rear side thereof, such that rear plate 30 has a simple structure and is easy to be manufactured, thus saving materials and space. In an embodiment of the present disclosure, the left cover 12 may be disposed at a left side of the front plate 20 and the right cover 13 may be disposed at a right side of the front plate 20, and the left cover 12 may be disposed at a left side of the rear plate 30 and the right cover 13 may be disposed at a right side of the rear plate 30, such that the front plate 20 and the rear plate 30 can be protected better.

As shown in Figs. 1-12, in some embodiments of the present disclosure, the adjacent separators 10 are detachably connected with each other via the snapping structure 60, such that it is convenient to assemble and disassemble the battery accommodating assembly 100, and the assembly process is simplified and the assembly efficiency is improved. Furthermore, for the power battery module 1000, an expansibility thereof is improved, a development cost thereof is reduced and a development time thereof is shortened.

The snapping structure 60 according to embodiments of the present disclosure will be described with reference to Figs. 1-6. As shown in Figs. 1-6, the snapping structure includes a snapping groove 61 formed in one of the adjacent separators 10 and a snapping tongue 62 disposed on the other of the adjacent separators 10 and adapted to snap in the snapping groove 61 to fasten the adjacent separators 10 together. In other words, the snapping structure 60 may include the snapping tongue 62 and the snapping groove 61, the snapping tongue 62 is disposed on one of the adjacent separators 10, and the snapping groove 61 is formed in the other of the adjacent separators 10 and is snapped with the snapping tongue 62 to fasten the adjacent separators 10 together.

Moreover, a positioning hole 621 may be formed in the snapping tongue 62, and a positioning boss 612 may be disposed on a bottom wall of the snapping groove 61 and is fitted into the positioning hole 621. Specifically, the positioning boss 612 is extended upward into the positioning hole 621, i.e. the snapping tongue 62 is snapped in the snapping groove 61, such that the adjacent separators 10 can be connected with each other. Therefore, the adjacent separators 10 have a simple structure and are easy to connect with each other, thus providing the high expansibility. Moreover, the snapping tongue 62 and the snapping groove 61 also have a function of positioning for the plurality of separators 10, thus facilitating the positioning between the adjacent separators 10 and improving the assembling speed.

As shown in Figs. 4-6, the separator 10 includes the upper frame plate 112. The upper frame plate 112 is located at a top of the separator 10. The snapping groove 61 is disposed in one of front and rear edges of the upper frame plate 112, and the snapping tongue 62 is disposed on the other of the front and rear edges of the upper frame plate 112. In other words, the separator 10 has both of the snapping groove 61 and the snapping tongue 62, such that when the plurality of separators 10 are arranged in a row, the plurality of separators 10 can be snapped with an another one by one.

Alternatively, the separator 10 includes the lower frame plate 113. The lower frame plate 113 is located at a bottom of the separator 10. The snapping groove 61 is disposed in one of front and rear edges of the lower frame plate 113, and the snapping tongue 62 is disposed on the other one of the front and rear edges of the lower frame plate 113. In other words, the snapping structure 60 may be disposed on both of the upper frame plate 112 and the lower frame plate 113 of the separator 10. Further, the snapping structure 60 may be merely disposed on the upper frame plate 112, or the snapping structure 60 may be merely disposed on the lower frame plate 113 or the snapping structure 60 may be disposed on the upper frame plate 112 and the lower frame plate 113 synchronously. In an embodiment of the present disclosure, the snapping structure 60 is disposed on the upper frame plate 112 and the lower frame plate 113, such that upper portions of the adjacent separators 10 are connected with each other and lower portions of the adjacent separators are also connected with each other, and thus a connection strength and a connection stability between the adjacent separators 10 are improved. Furthermore, the battery accommodating assembly 100 protects the battery 101 more reliably.

A plurality of the snapping tongues 62 and the snapping grooves 62 may be disposed on the upper frame plate 112 of the separator 10 and the snapping tongues 62 may be in correspondence one to one with the snapping groove 62. A plurality of the snapping tongues 62 and the snapping grooves 62 are disposed on the lower frame plate 113 of the separator 10 and the snapping tongue 62 may be in correspondence one to one with the snapping groove 62. Thereby, the connection strength and the connection stability between the adjacent separators 10 are further improved.

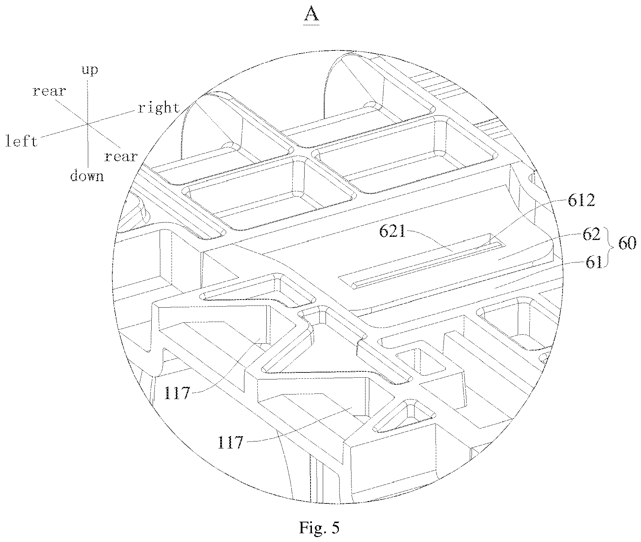

In an embodiment of the present disclosure as shown in Fig. 5, the snapping tongue 62 has a trapezoid shape, i.e. a projection of the snapping tongue 62 in the up-down direction is a trapezoid. Correspondingly, the snapping groove 61 may be as a trapezoid fitted with the snapping tongue, such that the snapping tongue 62 has a sufficient structure strength. Certainly, the present disclosure is not limited to this, and the snapping tongue 62 and the snapping groove 61 may have any other shapes as long as the snapping tongue 62 can be snapped in the snapping groove stably.

As shown in Fig. 6, a guiding slope 611 may be formed at an opening of the snapping groove 61, and the guiding slope 611 is configured to be inclined downward from an inner end of snapping groove 612 to the opening thereof. When the battery accommodating assembly 100 is assembled, the guiding slope 611 performs a guiding function on mounting the snapping tongue 62, i.e. the snapping tongue 62 is guided to insert into the snapping groove easily via the guiding slope 611, thus improving the assembling speed and reducing a assembling difficulty.

The snapping structure 60 according to another embodiment of the present disclosure will be described in the following with reference to Figs. 7-14.

As shown in Figs. 7-14, the snapping structure 60 may include a snap-fit groove 63 and a snap-fit pin 64. The snap-fit groove 63 is formed in the separator 10 and the snap-fit pin 64 is a detachable member with respect to the separator 10 and includes at least two mounting parts 641. The at least two mounting parts 641 are snapped in the snap-fit grooves 63 of at least two separators 10 so as to connect the at least two separators 10 with each other. In other words, the snap-fit pin 64 can connect the at least two adjacent or non-adjacent separators 10 with each other. By disposing the snap-fit pin 64, it is convenient to connect the separators 10 together, and it is easy to assemble the separators rapidly and various assembly manners are provided.

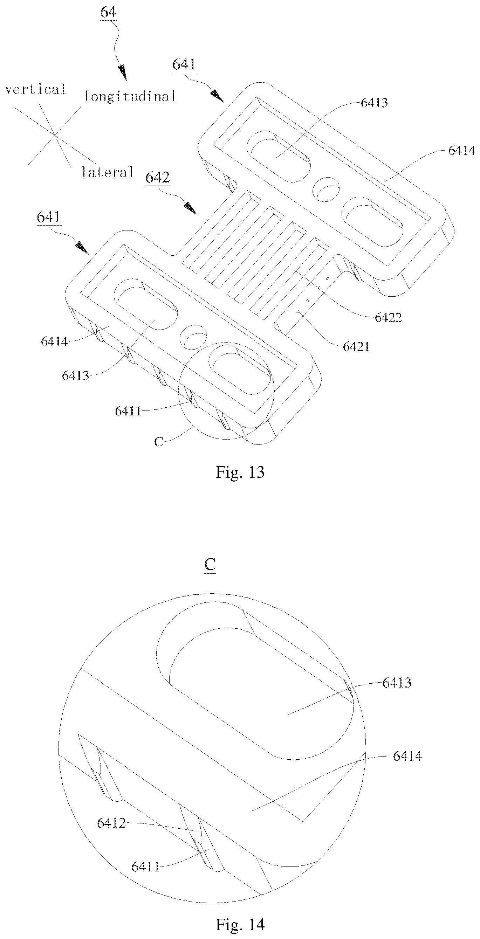

As shown in Figs. 10 and 13, in some embodiments of the present disclosure, the snap-fit pin 64 may further include a connecting bridge 642. Two mounting parts 641 are disposed at two ends of the connection bridge 642 respectively and are fitted in the snap-fit grooves 63 of adjacent separators 10 to connect the adjacent separators 10 with each other. In other words, the snap-fit pin 64 may merely connect the adjacent separators 10 with each other, such that the snap-fit pin 64 may have a relative small volume and a simple structure. Therefore, a connecting structure between separators 10 of the battery accommodating assembly 100 is simple and it is convenient to assembly the separators 10. By using the snap-fit pin 64 to connect the separators 10 with each other, the power battery module 1000 can include any number of separators 10 according to the actual requirement of the batteries, thus improving the extendibility of the power battery module 1000.

The snap-fit grooves 63 has an opening 631, and the openings 631 of the snap-fit grooves 63 in the adjacent separators 10 are opposing to each other so as to receive the connecting bridge 642. Thereby, when the snap-fit pin 64 is disposed between the separators 10, an upper surface of the snap-fit pin 64 is flush with an upper surface of the separator 10, such that the appearance of the battery accommodating assembly 100 is aesthetic and the snap-fit pin 64 is completely embedded into the snap-fit groove 63, thus avoiding a damage on the snap-fit pin 64 due to an external force.

In some embodiments of the present disclosure, the snap-fit groove 63 may be formed in each of the upper frame plates 112 of the adjacent separators 10 and the snap-fit pin 64 may be disposed between the upper frame plates 112 of the adjacent separators 10 to connect the adjacent separators 10 with each other.

Alternatively, the snap-fit groove 63 may be formed in each of the lower frame plates 113 of the adjacent separators 10 and the snap-fit pin 64 may be disposed between the lower frame plates 113 of the adjacent separators 10 to connect the adjacent separators 10 with each other.

In an embodiment of the present disclosure, the snap-fit pin 64 may be merely disposed between the upper frame plates 112 of the adjacent separators 10 or between the lower frame plates 112 of the adjacent separators 10. Alternatively, the snap-fit pins 64 may be disposed between the upper frame plates 112 of the adjacent separators 10 and between the lower frame plates 113 of the adjacent separators 10 synchronously. Therefore, the various connection manners between the separators 10 are provided so as to meet various mounting requirements of the battery accommodating assembly 100. In an embodiment of the present disclosure, the snap-fit pins 64 are disposed between the upper frame plates 112 of the adjacent separators 10 and between the lower frame plates 113 of the adjacent separators 10 synchronously, such that the upper portions of the adjacent separators 10 are connected with each other and the lower portions of the adjacent separators 10 are connected with each other, and the structure of the battery accommodating assembly 100 is stable, thus providing a more reliable protection of the battery accommodating assembly 100 for the battery 101 and the better safety performance for the power battery module 1000.

Alternatively, the mounting part 641 may have an interference fit with the snap-fit groove 63, or the mounting part 641 may be fitted in the snap-fit groove 63 via a bolt, such that the snap-fit pin 64 can be connected with the separator 10 closely, thus providing the high reliability and high connection strength and improving the working life of the power battery module 1000.

Alternatively, the mounting part 641 may be configured as a circular, a trapezoid or a rectangle shape. In other words, a projection of the mounting part 641 in the up-down direction may be a circular, a trapezoid or a rectangle. Correspondingly, the snap-fit groove 63 is also configured as a circular, a trapezoid or a rectangle matched with the mounting part 641. Therefore, the structure of the mounting part 641 is various and it is convenient to assemble the mounting part 641 onto the separator 10.

In an embodiment of the present disclosure, a step part 6416 is formed on a surface of the mounting part 641 facing the snap-fit groove 63, and a step part 632 corresponding to step part 6416 of the mounting part 641 is formed on the snap-fit groove 63, such that the mounting part 641 can be fitted in the snap-fit groove 63 more closely, and the snapping structure 60 is more stable and the structure stability of the battery accommodating assembly 100 is further improved.

As shown in Figs. 13 and 14, the connecting bridge 642 is extended in a longitudinal direction and two mounting parts 641 are disposed on two ends of the connecting bridge 642 in the longitudinal direction and are vertical to the longitudinal direction, i.e. the mounting part 641 is extended in a lateral direction. In other words, the snap-fit pin 64 is configured as a substantial " 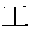 " shape. A plurality of protruded ridges 6411 extended in a thickness direction of the connection bridge 642 are disposed on an outer end surface of the mounting part 641 away from the connecting bridge 642, i.e. the protruded ridge 6411 is extended in a vertical direction. When the snap-fit pin 64 is being mounted into the separator 10, the mounting part 641 is fitted with the snap-fit groove 63 and the protruded ridge 6411 disposed on the outer end surface of the mounting part 641 performs a positioning and guiding function, such that it facilitates to mount the snap-fit pin 64. Moreover, a friction force may be generated between the protruded ridge 6411 and a wall of the snap-fit groove 63 so as to hold the snap-fit pin 64 during a whole service time of the snap-fit pin 64.

In some embodiments of the present disclosure, a cross-section of the protruded ridge 6411 is configured as an arc shape. Alternatively, one end of the protruded ridge 6411 has a slope 6412 inclined toward the other of the protruded ridge 6411, i.e. as shown in Fig. 14, one end (for example an upper end) of the protruded ridge 6411 in the vertical direction has the slope 6412 inclined toward the other end (for example an lower end) of the protruded ridge 6411 in the vertical direction. Alternatively, a cross-section of the other end (for example the lower end) of the protruded ridge 6411 may be configured as circle. Thereby, it is convenient to assemble a product during a use, and a force in the longitudinal direction may be generated between the protruded ridge 6411 and the wall of the snap-fit groove 63, such that it is hard for the snap-fit pin 64 to have a deformation to get out of the snap-fit groove 63. Certainly, in an embodiment of the present disclosure, the protruded ridge 6411 may be disposed on each of two opposing end surfaces of the mounting part 641, such that the friction force between the protruded ridge 6411 and the wall of the snap-fit groove 63 can be further improved, thus further increasing the connection strength of the snap-fit pin 64.

In an embodiment of the present disclosure, at least one of the two mounting parts 641 has at least one dismounting hole 6413 penetrating through the mounting part 641 in the thickness direction thereof. When mounting or dismounting the snap-fit pin 64, an operator can hold the snap-fit pin 64 via the dismounting hole 6413 to mount or dismount, such that it is easy and convenient to mount or dismount the snap-fit pin 64 rapidly. Alternatively, a mounting member such as a mounting boss or a mounting pin (not shown), fitted with the dismounting hole 6413, may be disposed on a bottom wall of the snap-fit groove 63, such that the snap-fit pin 64 can be fixed on the separator 10 more stably. One or a plurality of dismounting holes 6413 may be provided according to the actual assembling requirement.

As shown in Figs. 13 and 14, the mounting part 641 has a base stand 6414 extended outward in the thickness thereof. In other words, the base stand 6414 is extended in the longitudinal direction and a surface of the base stand 6414 is higher than a surface of the corresponding mounting part 641. The base stand 6414 is formed at peripheries of the corresponding mounting part 641. By disposing the base stand 6414, the structure strength of the mounting part 641 can be increased, and the strength of the snap-fit pin 64 can also be improved. Furthermore, the mounting part 641 is difficult to deform and the connection strength of snap-fit pin 64 between the separators 10 is improved.

Alternatively, an extended thickness of the base stand 6414 may be 1 to 10mm. In an embodiment of the present disclosure, the extended thickness of the base stand is 1 to 3mm, thus, the base stand 6414 has a proper thickness, and the material of the base stand 6414 can be saved.

Alternatively, at least one strengthening rib 6422 is formed in the surface of the connecting bridge 642. By disposing the strengthening rib 6422, the structure strength of the connecting bridge is strengthened and the connecting bridge 642 is not easy to deform, thus increasing the working life of the snap-fit pin 64.

In some embodiments of the present disclosure, as shown in Fig. 13, a plurality of bosses 6421 are disposed on at least one of two side surfaces of the connecting bridge 642 in the lateral direction and are protruded outward from the corresponding side surface. By disposing the plurality of bosses 6421, the friction force between the snap-fit pin 64 and the wall of the snap-fir groove 63 is increased, thus further improving the connection strength between the snap-fit pin 64 and separator 10.

Alternatively, each of the plurality of bosses 6421 is configured as a substantial semisphere, such that it is convenient for a demoulding thereof during an injection molding of the snap-fit pin 64. It should be noted that, if a size of the boss 6421 is too small, the friction force between the snap-fit pin 64 and the wall of the snap-fit groove 63 is not enough; if the size of the boss 6421 is too large, it is difficult for the demoulding of the snap-fit 64. Preferably, a diameter of the boss 6421 is from 1mm to 2mm, i.e. a diameter of a connecting part of the boss 6421 and the connecting bridge 642 may be from 1mm to 2mm, thus ensuring the friction force between the snap-fit pin 64 and the wall of the snap-fit groove 63 and facilitating the demoulding of the snap-fit pin 64. The plurality of bosses 6421 are spaced apart from each other in the longitudinal direction, such that the friction force between the snap-fit pin 64 and the wall of the snap-fit groove 63 is uniform.

Considering the connection strength of the snap-fit pin 64 and the cooperation between the snap-fit 64 and the separator 10, a thickness of the whole snap-fit pin 64 may be from 8mm to 15mm. In an embodiment of the present disclosure, the thickness of the whole snap-fit pin 64 is from 10mm to 13mm, i.e. a thickness of a projection of the snap-fit 64 in the up-down direction is from 10mm to 13mm. Thereby, the snap-fit pin 64 has the enough structure strength and saves material, and it is convenient and reliable to connect the snap-fit pin 64 with the separator 10.

Alternatively, the snap-fit pin 64 is a plastic molding part or a plastic-metal mixed molding part. For example, the connecting bridge 642, the mounting part 641, the protruded ridge 6411, the boss 6421 and the base stand 6414 are plastic parts and are formed integrally by the injection molding, and it is easy and convenient to form these plastic parts. The connecting bridge 642, the mounting part 641, the protruded ridge 6411, the boss 6421 and the base stand 6414 may be made of PPO (Poly Phenylene Oxide), PP (Poly Propylene), PPE (Poly Phenyl Ether) or these materials embedded with metal therein. Thereby, these components have the high strength, the high corrosion resistance, the great weather fastness, the good fire resistance and the high insulativity, which meet the requirement of safety performance and reliability, and thus the snap-fit pin 64 has the high structure strength.

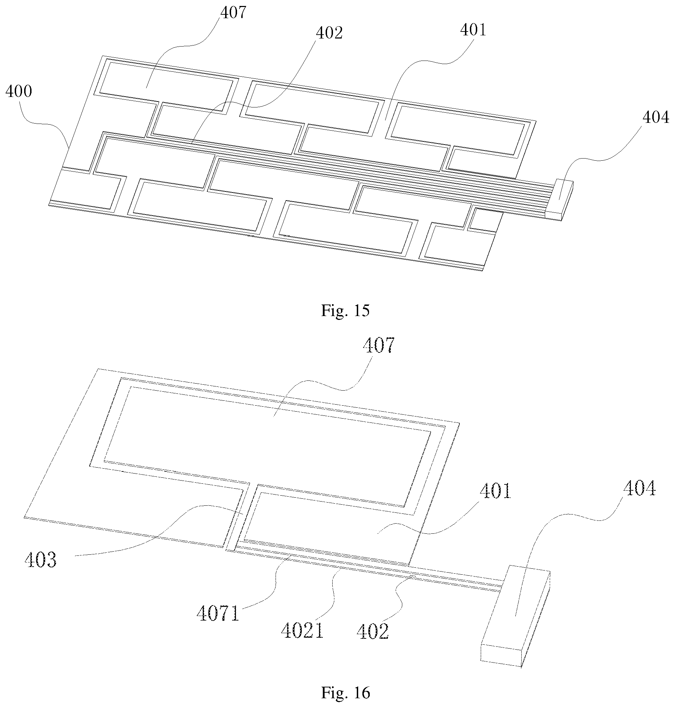

The signal collection and power connection assembly 400 according to embodiments of the present disclosure will be described in the following with reference to Figs. 15- 19.

The power connection line 4071 is formed by a first sheet-like conductive element configured to perform a power connection and the single collection line 4021 is a second sheet-like conductive element configured to perform a signal transmission. The power connection line 4071 and the signal collection line 4021 may be two conductive elements independent from each other, or configured as two conductive elements which are partially integrated and partially independent from each other. In an embodiment of the present disclosure, the signal collection and power connection assembly 400 further includes a common line 403 formed by a third sheet-like conductor disposed on the substrate 401. The common line 403 has a first end coupled with the power connection member 407 and a second end coupled with the first ends of the power connection line 4071 and the signal collection line respectively 4021 (as shown in Fig. 16).

In other words, portions of the power connection line 4071 and the signal collection 4021 connected with the power connection member 407 are integrated via the common line 403, and the common line 403 can both perform the power connection with the power connection line 4071 and perform the signal transmission with the signal collection line 4021. Thus, the portions of the power connection line 4071 and the signal collection line 4021 can be integrated together and a structure of signal collection and power connection assembly 400 is further simplified.

In an embodiment of the present disclosure, the signal collection and power connection line 400 further includes a connector 404. The connector 404 is coupled with a second end of the power connection line 4071 and a second end of the signal collection line 4021. Specifically, the connector 404 according to embodiments of the present disclosure is configured to electrically couple with the power connection 4071 and the signal collection 4021 and is adapted to couple with an external signal output device and a power connection device, and the connector 404 may be a FPC or PCB connector which is purchasable in market according to an actual condition.

An assembling relationship between the connector 404 and the substrate 401 is not limited as long as the connector 404 can be coupled with the external signal output device and the power connection device to implement the signal transmission and the power connection. Furthermore, the connector 404 is disposed at an edge of the substrate 401. Correspondingly, the second end of the power connection line 4071 and the second end of the signal collection line 4021 are extended to the edge of the substrate 401. Thereby, it is convenient for the connector 404 to couple with the external signal output device and the power connection device.

In an embodiment of the present disclosure, the substrate 401 is a flexible board. Thereby, when the substrate 401 is used to connect the power batteries with each other, the flexible substrate 401 can be suitable for relative displacements and assembly tolerances between the plurality of power batteries, thus improving the reliability thereof.

Specifically, the substrate 401 may be a protective film at two sides of the FPC board and is generally made of flexible materials such as a PI film. The connector 404 is connected with the substrate 401. The substrate 401 is connected with the external signal output device and the power connection device via the connector 404, in which a connection manner thereof may be welding such as a soldering, a mechanical connection and a mixed connection combining the above two. A structure of the FPC or PCB connector can be understood by those skilled in the related art and is easy to implement, and thus it is omitted herein.

A structure of each of the signal collection line 4021 and the power connection line 4071 is not limited, and an assembling manner of the each of the signal collection line 4021 and the power connection line 4071 on the substrate 401 is not limited as well. In an embodiment of the present disclosure, at least one of the signal collection line 4021 and the power connection line 4071 is formed by a conductive metal sheet fixed on the substrate 401. Specifically, the conductive metal sheet forming at least one of the power connection line 4071 and the signal collection line 4021 is fixed on the substrate 401 by at least one of adhering, injection molding, hot pressing and welding.

In other words, the power connection line 4071 and the signal collection line 4021 are integrated on the substrate 401 by adhering, injection molding, hot pressing or welding. Thereby, it is easy to integrate the power connection line 4071 and the signal collection line 4021 on the substrate 401 by these methods, thus reducing a difficulty of forming the signal collection and power connection assembly 400.

In an embodiment of the present disclosure, at least one of the power connection line 4071 and the signal collection line 4021 is formed by a conductive metal layer on the substrate 401. Specifically, the conductive metal layer is a conductive metal coating on the substrate 401. In other words, the power connection line 4071 and the signal collection line 4021 are conductive metal coatings on the substrate 401, and the conductive metal coating may be formed by electroplating or chemical plating. Thus, it is more convenient for the power connection line 4071 and the signal collection line 4021 to be formed and integrated on the substrate 401 without a secondary connection or assembling, thus improving an accuracy and reliability of the signal transmission and power connection.

In an embodiment of the present disclosure, the substrate 401 is the flexible board and at least one of the power connection line 4071 and the signal collection line 4021 is formed by etching a conductive metal foil on the substrate 401. In other words, the power connection line 4071 and the signal collection line 4021 are formed on the substrate 401 by etching. Thereby, it is convenient for the power connection line 4071 and the signal collection line 4021 to be formed on the substrate 401.

It can be understood that, a line slot (not shown) may be formed in a surface of the substrate 401, and at least one of the power connection line 4071 and the signal collection line 4021 is disposed in the line slot. Thus, by disposing the power connection line 4071 and the signal collection line 4021 in the line slot, the line slot has a function of protecting the power connection line 4071 and the signal collection line 4021, thus improving the reliability of the signal collection and power connection assembly 400.

Specifically, there is no special limitation to a forming manner of the power connection line 4071 and the signal collection line 4021 in the line slot. In an embodiment of the present disclosure, at least one of the power connection line 4071 and the signal collection line 4021 is formed by the conductive metal sheet fixed in the line slot or the conductive metal coating in the line slot. In another embodiment of the present disclosure, at least one of the power connection line 4071 and the signal collection line 4021 is formed by etching the conductive metal foil in the line slot. A structure of each of the power connection line 4071 and the signal collection line 4021 in the line slot is similar to that of each of the power connection line 4071 and the signal collection line 4021 on the substrate 401, and thus this is omitted herein.

A structure of the signal collection member 402 may be reasonably selected according to a kind of data or signal to be collected. In an embodiment of the present disclosure, the signal collection member 402 includes at least one of a temperature sensing element, a humidity sensing element, a pressure sensing element, a concentration sensing element, and a voltage sensing element. In other words, the signal collection member 402 according to embodiments of the present disclosure may be one of the temperature sensing element, the humidity sensing element, the pressure sensing element, the concentration sensing element, and the voltage sensing element or a combination thereof. The signal collection member 402 can be reasonably selected according to the actual condition.

During usage, the signal collection member 402 is just required to be fixed on the substrate 401 and to be coupled in the signal collection line 4021 so as to connect the signal collection and power connection assembly 400 with the power battery. Thus, the signal collection member 402 can be used to collect a temperature, a battery air pressure, an electrolyte concentration and a humidity without adding a new component in the signal collection and power connection assembly 400, such that it is convenient for use and the related data of the power battery is collected efficiently, and an accuracy of a data collection of the single collection and power connection assembly 400 can be ensured.

A structure and an assembling manner of a power connection member 407 on the substrate 401 according to embodiments of the present disclosure will be described in the following.

In an embodiment of the present disclosure, the power connection member 407 is formed by a sheet-like conductive element fixed on the substrate 401. In other words, the power connection member 407 is configured as the sheet-like conductive element and is fixed on the substrate 401.

In some embodiments of the present disclosure, the power connection member 407 is formed by a conductive metal sheet fixed on the substrate 407. Specifically, the conductive metal sheet forming the power connection member 407 is fixed on the substrate 401 by at least one of adhering, injection molding, hot pressing and welding. In other words, the power connection member 407 is configured as the conductive metal sheet integrated on the substrate 401 by at least one of adhering, injection molding, hot pressing and welding, thus reducing the difficulty of forming the signal collection and power connection assembly 400.

In an embodiment of the present disclosure, the power connection member 407 is formed by a conductive metal layer on the substrate 401. Specifically, the conductive metal layer forming the power connection member 407 is a conductive metal coating which is formed on the substrate 401 by electroplating or chemical plating. Thereby, it is more convenient for the power connection member 407 to be formed and integrated on the substrate 401 without a secondary connection or assembling, thus improving the accuracy and reliability of the signal transmission and power connection.

In other embodiments of the present disclosure, the power connection member 407 is a conductive region formed by etching a conductive metal foil on the substrate 401, such that it is also convenient for the power connection member 407 to be formed on the substrate 401.

Furthermore, in an embodiment of the present disclosure, the substrate 401 includes a power connection groove (not shown) in a surface thereof, and the power connection member 407 is fixed in the power connection groove. Since the power connection member 407 is disposed in the power connection groove, the power connection groove has a function of protecting the power connection member 407, thus improving the reliability of the signal collection and power connection assembly 400.

Specifically, there is no special limitation to a forming manner of the power connection member 407 in the power connection groove. In an embodiment of the present disclosure, the power connection member 407 may be formed by the conductive metal sheet fixed in the power connection groove or the conductive metal coating in the power connection groove. In another embodiment of the present disclosure, the power connection member 407 is formed by etching the conductive metal foil in the power connection groove. A structure of the power connection member 407 is similar to that of the power connection member 407 on the substrate 401, and it is omitted herein.

During the usage of the signal collection and power connection assembly 400, the power connection member 407 of the signal collection and power connection assembly 400 are coupled with electrode terminals of the adjacent power batteries, and a number of the power connection member 407 determines a number of the power batteries to be coupled. Moreover, an arrangement position of the power connection member 407 can be adjusted according to an arrangement of different power batteries. In an embodiment of the present disclosure, a plurality of power connection members 407 are arranged and spaced apart from each other on the substrate 401. Furthermore, the plurality of power connection members 407 may be arranged in a plurality of rows parallel with each other.

In some embodiments of the present disclosure, the plurality of power connection members 407 are arranged in two rows, and the two rows of power connection members 407 are extended along first and second side edges of the substrate 401 opposing to each other respectively. Correspondingly, the signal collection and power connection assembly 400 is located between the adjacent two rows of power connection members 407. In other words, the power connection line 4071 and the signal collection line 4021 are disposed between the adjacent two rows of power connection members 407 and are coupled with different power connection members 407 respectively. Thereby, the signal collection and power connection assembly 400 can be applied to a structure having a plurality of power batteries arranged in different rows, and the plurality of power connection members 407 are coupled with the electrode terminals of the adjacent and parallel arranged power batteries, and the power connection line 4071 and the signal collection line 4021 can be configured to perform the power connection or the signal transmission between the different power batteries and an external environment respectively.

In an embodiment of the present disclosure as shown in Fig. 16, the power connection line 4071 and the signal collection line 4021 coupled with a same power connection member 407 are arranged parallel with each other. Thereby, the power connection line 4071 and the signal collection line 4021 are arranged and spaced apart from each other without interfering with each other, thus ensuring the reliability of the power connection of the power connection line 4071 and the accuracy of the signal transmission of the signal collection line 4021.

Furthermore, in an embodiment of the present disclosure, the signal collection and power connection assembly 400 further includes a protection film (not shown) disposed on the substrate 401 for covering the power connection member 407, the signal collection member 402, the power connection line 4071 and the signal collection line 4021. Specifically, the protection film according to embodiments of the present disclosure can integrate the power connection member 407, the signal collection member 402, the power connection line 4071 and the signal collection line 4021 on the substrate 401. The protection film has a pressure resistance, the insulativity and an abrasive resistance and can improve a structure sealing property of the signal collection and power connection assembly 400. Moreover, the protection film has a function of protecting the power connection line 4071 and the signal collection line 4021, such that the safety and reliability of the signal collection and power connection assembly 400 can be ensured.

In some embodiments of the present disclosure, the signal collection and power connection assembly 400 is configured as a FPC board, and the power connection member 407, the power connection line 4071 and the signal collection line 4021 are formed on the FPC board by etching. In an embodiment of the present disclosure, the FPC board includes a conductive metal foil and a protective film (not shown) covering two sides of the conductive metal foil. The protective film is formed by the substrate 401. The power connection member 407, the power connection line 4071 and the signal collection line 4021 are formed by etching the conductive metal foil. Furthermore, a protection film is disposed on the protective film at one side of the conductive metal foil.

In other words, the whole of the signal collection and power connection assembly 400 is formed as the FPC board. The FPC board includes the conductive metal foil and the protective film on the conductive metal foil, and protective film is formed by a part of the substrate 401. The conductive metal foil is etched to form the power connection member 407, the power connection line 4071 and the signal collection line 4021.

It can be understood that, the common line 403 of the power connection line 4071 and the signal collection line 4021 may be formed on the substrate in a same manner. Specifically, the common line 403 is formed on the FPC board by etching. The common line 403 has a first end coupled with the power connection member 407 and a second end coupled with the first ends of the power connection line 4071 and the signal collection line 4021. Thereby, a forming process of the signal collection and power connection assembly 400 is simplified and the reliability of the signal collection and power connection assembly 400 is ensured.

The single collection and power connection assembly 400 according to the embodiment of the present disclosure further includes a connector 404. The connector 404 is coupled with the second end of the power connection line 4071 and the second end of the signal collection line 4021. Specifically, the connector 404 is disposed on the substrate 401. Furthermore, the connector 404 is disposed at the edge of the substrate 404 and the second end of the power connection line 4071 and the second end of the signal collection line 4021 are extended to the edge of the substrate 401. The structure and arrangement of the connector 404 in the embodiment are similar to those of the connector 404 in above embodiments of the present disclosure, and thus they are omitted herein.

There is no special limitation to a connection manner between the power connection member 407 and the battery 101, for example the connection manner may be a welding or screw fastening. In an embodiment of the present disclosure, the power connection member 407 is welded with the electrode terminal 411. In another embodiment of the present disclosure, a mounting hole is formed in the signal collection and power connection assembly 400, and a positioning member (not shown) is disposed on the battery group. The single collection and power connection assembly 400 is pre-positioned onto the battery group by a connection between the mounting hole and the positioning member. Thereby, single collection and power connection assembly 400 may be connected with the battery group in different manners, i.e. the connection manner between the power connection member 407 and the battery group is various, thus providing a high adaptability.

There is no special limitation to the connection manner between respective batteries 101. In an embodiment of the present disclosure, the plurality of batteries 101 are connected with each other via a series connection, a parallel connection or a series-parallel connection, and the connection manner thereof may be an impulse welding, a laser beam welding or the mechanical connection.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

## Claims

1. A power battery module (1000), comprising:
a battery accommodating assembly (100) having a plurality of separators (10), the separator (10) comprising:
a separator body (11) having a front portion defining a front accommodating groove (14) and a rear portion;
a left cover (12) disposed at a left end of the separator body (11); and
a right cover (13) disposed at a right end of the separator body (11),
wherein adjacent separators (10) are detachably connected with each other, and the front accommodating groove (14) of one of the adjacent separators (10) and the rear portion of the other of adjacent separators (10) define a battery chamber;
a battery group comprising a plurality of batteries (101) accommodated in the battery chambers correspondingly, the battery (101) having an electrode terminal (411); **characterized by**
a signal collection and power connection assembly (400) mounted on the separator (10) and comprising:
a substrate (401);
a power connection member (407) fixed to the substrate (401) and connected with the electrode terminal (411);
a power connection line (4071) formed by a first sheet-like conductive element disposed on the substrate (401), and defining a first end electrically connected with the power connection member (407) and a second end;
a signal collection line (4021) formed by a second sheet-like conductive element disposed on the substrate (401), and defining a first end connected with the power connection member (407) and a second end;
a signal collection member disposed on the substrate (401) and connected with the signal collection line (4021); and
a common line (403) formed by a third sheet-like conductor disposed on the substrate (401), wherein the common line (403) has a first end coupled with the power connection member (407) and a second end coupled with the first ends of the power connection line (4071) and the signal collection line (4021) respectively.

2. The power battery module (1000) according to claim 1, wherein the rear portion of the separator (10) defines a rear accommodating groove, and a front notch (141) is formed in at least one of left and right walls of the front accommodating groove (14), and a rear notch (151) corresponding to the front notch (141) is formed in at least one of left and right walls of the rear accommodating groove,
wherein the separator body (11) preferably comprises:
a vertical plate (111);
an upper frame plate (112) disposed at a top edge of the vertical plate (111);
a lower frame plate (113) disposed at a bottom edge of the vertical plate (111);
a left plate (114) disposed at a left end of the vertical plate (111) and defining an upper end connected with the upper frame plate (112) and a lower end connected with the lower frame plate (113); and
a right plate (115) disposed at a right end of the vertical plate (111) and defining an upper end connected with the upper frame plate (112) and a lower end connected with the lower frame plate (113),
wherein each of the front and rear accommodating grooves is defined by the vertical plate (111), the upper frame plate (112), the lower frame plate (113), the left plate (114) and the right plate (115).

3. The power battery module (1000) according to claim 2, wherein the front notch (141) is formed in a front edge of each of the left and right plates (115), and the rear notch (151) is formed in a rear edge of each of the left and right plates (115).

4. The power battery module (1000) according to claim 2, wherein a left end of the upper frame plate (112) is extended leftward beyond the left plate (114) so as to form a left-upper extending part, a left end of the lower frame plate (113) is extended leftward beyond the left plate (114) so as to form a left-lower extending part, a right end of the upper frame plate (112) is extended rightward beyond the right plate (115) so as to form a right-upper extending part, and a right end of the lower frame plate (113) is extended rightward beyond the right plate (115) so as to form a right-lower extending part,
wherein a snapping slot is formed in each of the left-upper extending part, the left-lower extending part, the right-upper extending part and the right-lower extending part.

5. The power battery module (1000) according to claim 4, wherein a left-upper clasp snapped in the snapping slot of the left-upper extending part and a left-lower clasp snapped in the snapping slot of the left-lower extending part are disposed on a right surface of the left cover (12), and a right-upper clasp snapped in the snapping slot of the right-upper extending part and a right-lower clasp snapped in the snapping slot of the right-lower extending part are disposed on a left surface of the right cover (13).

6. The power battery module (1000) according to claim 2, wherein a front step (118) is disposed at a front side edge of each of the upper and lower frame plates (113), and a rear step (119) is disposed at a rear side edge of each of the upper (112) and lower frame plates (113),
wherein the front step (118) preferably comprises a first front step segment (1181) facing downwards and a second front step segment (1182) facing upwards, and the rear step (119) preferably comprises a first rear step segment (1191) facing upwards and corresponding to the first front step segment (1181) and a second rear step segment (1192) facing downwards and corresponding to the second front step segment (1182).

7. The power battery module (1000) according to claim any one of claims 2-6, wherein a plurality of the front notches (141) are arranged and spaced from one another in the up-down direction, and a plurality of the rear notches (151) are arranged and spaced from one another in the up-down direction.

8. The power battery module (1000) according to claim 1, wherein the adjacent separators (10) are detachably connected with each other via a snapping structure,
wherein the snapping structure preferably comprises:
a snapping groove formed in one of the adjacent separators (10); and
a snapping tongue disposed on the other of the adjacent separators (10) and adapted to snap in the snapping groove to fasten the adjacent separators (10) together.

9. The power battery module (1000) according to claim 8, wherein the rear portion of the separator (10) defines a rear accommodating groove, and the battery chamber is defined by the front accommodating groove (14) of one of adjacent separators (10) and the rear accommodating groove of the other of the adjacent separators (10),
wherein the separator body (11) preferably comprises:
a vertical plate (111);
an upper frame plate (112) disposed at a top edge of the vertical plate (111);
a lower frame plate (113) disposed at a bottom edge of the vertical plate (111);
a left plate (114) disposed at a left end of the vertical plate (111) and defining an upper end connected with the upper frame plate (112) and a lower end connected with the lower frame plate (113); and
a right plate (115) disposed at a right end of the vertical plate (111) and defining an upper end connected with the upper frame plate (112) and a lower end connected with the lower frame plate (113),
wherein each of the front and rear accommodating grooves is defined by the vertical plate (111), the upper frame plate (112), the lower frame plate (113), the left plate (114) and the right plate (115).

10. The power battery module (1000) according to claim 9, wherein the snapping groove is formed in one of front and rear edges of the upper or lower frame plate (113), and the snapping tongue is disposed on the other one of the front and rear edges of the upper or lower frame plate (113).

## Patentansprüche

1. Leistungsbatteriemodul (1000), umfassend:
eine Batterieaufnahmeanordnung (100), die eine Mehrzahl von Separatoren (10) aufweist, wobei der Separator (10) umfasst:
einen Separatorkörper (11) mit einem vorderen Abschnitt, der eine vordere Aufnahmenut (14) definiert, und einem hinteren Abschnitt;
eine linke Abdeckung (12), die an einem linken Ende des Separatorkörpers (11) angeordnet ist; und
eine rechte Abdeckung (13), die an einem rechten Ende des Separatorkörpers (11) angeordnet ist,
wobei benachbarte Separatoren (10) lösbar miteinander verbunden sind, und wobei die vordere Aufnahmenut (14) von einem der benachbarten Separatoren (10) und der hintere Abschnitt des anderen der benachbarten Separatoren (10) eine Batteriekammer definieren;
eine Batteriegruppe, umfassend eine Mehrzahl von Batterien (101), die in den entsprechenden Batteriekammern untergebracht sind, wobei die Batterie (101) einen Elektrodenanschluss (411) aufweist;
**gekennzeichnet durch**
eine Signalsammel- und Leistungsverbindungsanordnung (400), die auf dem Separator (10) montiert ist und Folgendes umfasst:
ein Substrat (401);
ein Leistungsverbindungselement (407), das an dem Substrat (401) befestigt ist und das mit den Elektrodenanschlüssen (411) verbunden ist;
eine Leistungsverbindungsleitung (4071), die durch ein auf dem Substrat (401) angeordnetes, erstes blattförmiges leitendes Element ausgebildet ist und die ein erstes Ende, das mit dem Leistungsverbindungselement (407) elektrisch verbunden ist, und ein zweites Ende definiert;
eine Signalsammelleitung (4021), die durch ein auf dem Substrat (401) angeordnetes, zweites blattförmiges leitendes Element ausgebildet ist und die ein erstes Ende, das mit dem Leistungsverbindungselement (407) verbunden ist, und ein zweites Ende definiert;
ein Signalsammelelement, das auf dem Substrat (401) angeordnet ist und das mit der Signalsammelleitung (4021) verbunden ist; und
eine gemeinsame Leitung (403), die durch ein auf dem Substrat (401) angeordnetes, drittes blattförmiges leitendes Element ausgebildet ist, wobei die gemeinsame Leitung (403) ein erstes Ende, das mit dem Leistungsverbindungselement (407) gekoppelt ist, und ein zweites Ende, das mit dem ersten Ende der Leistungsverbindungsleitung (4071) bzw. der Signalsammelleitung (4021) gekoppelt ist, aufweist.

2. Leistungsbatteriemodul (1000) nach Anspruch 1, wobei der hintere Abschnitt des Separators (10) eine hintere Aufnahmenut definiert und wobei eine vordere Kerbe (141) in zumindest einer von einer linken und einer rechten Wand der vorderen Aufnahmenut (14) ausgebildet ist und wobei eine hintere Kerbe (151), die der vorderen Kerbe (141) entspricht, in zumindest einer von einer linken und einer rechten Wand der hinteren Aufnahmenut ausgebildet ist,
wobei der Separatorkörper (11) vorzugsweise umfasst:
eine vertikale Platte (111);
eine obere Rahmenplatte (112), die an einer oberen Kante der vertikalen Platte (111) angeordnet ist;
eine untere Rahmenplatte (113), die an einer unteren Kante der vertikalen Platte (111) angeordnet ist;
eine linke Platte (114), die an einem linken Ende der vertikalen Platte (111) angeordnet ist und die ein oberes Ende, das mit der oberen Rahmenplatte (112) verbunden ist, und ein unteres Ende, das mit der unteren Rahmenplatte (113) verbunden ist, definiert; und
eine rechte Platte (115), die an einem rechten Ende der vertikalen Platte (111) angeordnet ist und die ein oberes Ende, das mit der oberen Rahmenplatte (112) verbunden ist, und ein unteres Ende, das mit der unteren Rahmenplatte (113) verbunden ist, definiert,
wobei jede der vorderen und der hinteren Aufnahmenut durch die vertikale Platte (111), die obere Rahmenplatte (112), die untere Rahmenplatte (113), die linke Platte (114) und die rechte Platte (115) definiert ist.

3. Leistungsbatteriemodul (1000) nach Anspruch 2, wobei die vordere Kerbe (141) in einer vorderen Kante von jeder von der linken und der rechten Platte (115) ausgebildet ist und wobei die hintere Kerbe (151) in einer hinteren Kante von jeder von der linken und der rechten Platte (115) ausgebildet ist.

4. Leistungsbatteriemodul (1000) nach Anspruch 2, wobei ein linkes Ende der oberen Rahmenplatte (112) nach links über die linke Platte (114) hinaus verlängert ist, um einen sich links oben erstreckenden Teil auszubilden, wobei ein linkes Ende der unteren Rahmenplatte (113) nach links über die linke Platte (114) hinaus verlängert ist, um einen sich links unten erstreckenden Teil auszubilden, wobei ein rechtes Ende der oberen Rahmenplatte (112) nach rechts über die rechte Platte (115) hinaus verlängert ist, um einen sich rechts oben erstreckenden Teil auszubilden, und wobei ein rechtes Ende der unteren Rahmenplatte (113) nach rechts über die rechte Platte (115) hinaus verlängert ist, um einen sich rechts unten erstreckenden Teil auszubilden,
wobei ein Schnappschlitz in jedem von dem sich links oben erstreckenden Teil, dem sich links unten erstreckenden Teil, dem sich rechts oben erstreckenden Teil und dem sich rechts unten erstreckenden Teil ausgebildet ist.

5. Leistungsbatteriemodul (1000) nach Anspruch 4, wobei ein Links-Oben-Verschluss, der in den Schnappschlitz des sich links oben erstreckenden Teils eingeschnappt ist, und ein Links-Unten-Verschluss, der in den Schnappschlitz des sich links unten erstreckenden Teils eingeschnappt ist, auf einer rechten Oberfläche der linken Bedeckung (12) angeordnet sind, und wobei ein Rechts-Oben-Verschluss, der in den Schnappschlitz des sich rechts oben erstreckenden Teils eingeschnappt ist, und ein Rechts-Unten-Verschluss, der in den Schnappschlitz des sich rechts unten erstreckenden Teils eingeschnappt ist, auf einer linken Oberfläche der rechten Bedeckung (13) angeordnet sind.

6. Leistungsbatteriemodul (1000) nach Anspruch 2, wobei eine vordere Stufe (118) an einer vorderen Seitenkante von jeder von der oberen und der unteren Rahmenplatte (113) angeordnet ist und wobei eine hintere Stufe (119) an einer hinteren Seitenkante von jeder von der oberen (112) und der unteren Rahmenplatte (113) angeordnet ist,
wobei die vordere Stufe (118) vorzugsweise ein erstes vorderes Stufensegment (1181), das nach unten zeigt, und ein zweites vorderes Stufensegment (1182), das nach oben zeigt, umfasst und wobei die hintere Stufe (119) vorzugsweise ein erstes hinteres Stufensegment (1191), das nach oben zeigt und dem ersten vorderen Stufensegment (1181) entspricht, und ein zweites hinteres Stufensegment (1192), das nach unten zeigt und dem zweiten vorderen Stufensegment (1182) entspricht, umfasst.

7. Leistungsbatteriemodul (1000) nach einem der Ansprüche 2-6, wobei eine Mehrzahl der vorderen Kerben (141) entlang einer Auf-und-Ab-Richtung angeordnet sind und voneinander beabstandet sind und wobei eine Mehrzahl der hinteren Kerben (151) entlang der Auf-und-Ab-Richtung angeordnet sind und voneinander beabstandet sind.

8. Leistungsbatteriemodul (1000) nach Anspruch 1, wobei die benachbarten Separatoren (10) über eine Schnappstruktur lösbar miteinander verbunden sind,
wobei die Schnappstruktur vorzugsweise umfasst:
eine Schnappnut, die in einem der benachbarten Separatoren (10) ausgebildet ist; und
eine Schnappzunge, die an dem anderen von den benachbarten Separatoren (10) angeordnet ist und die angepasst ist, um in die Schnappnut einzuschnappen, um die benachbarten Separatoren (10) aneinander zu befestigen.

9. Leistungsbatteriemodul (1000) nach Anspruch 8, wobei der hintere Abschnitt des Separators (10) eine hintere Aufnahmenut definiert, und wobei die Batteriekammer durch die vordere Aufnahmenut (14) von einem von benachbarten Separatoren (10) und die hintere Aufnahmenut von dem anderen der benachbarten Separatoren (10) definiert ist,
wobei der Separatorkörper (11) vorzugsweise umfasst:
eine vertikale Platte (111);
eine obere Rahmenplatte (112), die an einer oberen Kante der vertikalen Platte (111) angeordnet ist;
eine untere Rahmenplatte (113), die an einer unteren Kante der vertikalen Platte (111) angeordnet ist;
eine linke Platte (114), die an einem linken Ende der vertikalen Platte (111) angeordnet ist und ein oberes Ende, das mit der oberen Rahmenplatte (112) verbunden ist, und ein unteres Ende, das mit der unteren Rahmenplatte (113) verbunden ist, definiert; und
eine rechte Platte (115), die an einem rechten Ende der vertikalen Platte (111) angeordnet ist und ein oberes Ende, das mit der oberen Rahmenplatte (112) verbunden ist, und ein unteres Ende, das mit der unteren Rahmenplatte (113) verbunden ist, definiert,
wobei jede der vorderen und der hinteren Aufnahmenut durch die vertikale Platte (111), die obere Rahmenplatte (112), die untere Rahmenplatte (113), die linke Platte (114) und die rechte Platte (115) definiert ist.

10. Leistungsbatteriemodul (1000) nach Anspruch 9, wobei die Schnappnut in einer von der vorderen und der hinteren Kante der oberen oder der unteren Rahmenplatte (113) ausgebildet ist und wobei die Schnappzunge an der anderen von der vorderen und der hinteren Kante der oberen oder der unteren Rahmenplatte (113) angeordnet ist.

## Revendications

1. Module de batterie d'alimentation (1000), comprenant :
un ensemble de réception de batterie (100) ayant une pluralité de séparateurs (10), le séparateur (10) comprenant :
un corps de séparateur (11) ayant une partie avant définissant une rainure de réception avant (14) et une partie arrière ;
un capot gauche (12) disposé à une extrémité gauche du corps du séparateur (11); et
un capot droit (13) disposé à une extrémité droite du corps du séparateur (11),
dans lequel des séparateurs adjacents (10) sont connectés de manière détachable les uns aux autres, et la rainure de réception avant (14) de l'un des séparateurs adjacents (10) et la partie arrière de l'autre des séparateurs adjacents (10) définissent une chambre de batterie ;
un groupe de batteries comprenant une pluralité de batteries (101) logées dans les chambres de batterie de manière correspondante, la batterie (101) ayant une borne d'électrode (411) ; **caractérisé par**
un ensemble de collecte de signal et de connexion de puissance (400) monté sur le séparateur (10) et comprenant :
un substrat (401) ;
un élément de connexion de puissance (407) fixé au substrat (401) et connecté à la borne d'électrode (411) ;
une ligne de connexion de puissance (4071) formée par un premier élément conducteur analogue à une feuille disposé sur le substrat (401), et définissant une première extrémité connectée électriquement à l'élément de connexion de puissance (407) et une seconde extrémité ;
une ligne de collecte de signal (4021) formée par un deuxième élément conducteur analogue à une feuille disposé sur le substrat (401), et définissant une première extrémité connectée à l'élément de connexion de puissance (407) et une seconde extrémité ;
un élément de collecte de signal disposé sur le substrat (401) et connecté à la ligne de collecte de signal (4021) ; et
une ligne commune (403) formée par un troisième conducteur analogue à une feuille disposé sur le substrat (401), dans lequel la ligne commune (403) a une première extrémité couplée à l'élément de connexion de puissance (407) et une seconde extrémité couplée respectivement aux premières extrémités de la ligne de connexion de puissance (4071) et de la ligne de collecte de signal (4021).

2. Module de batterie d'alimentation (1000) selon la revendication 1, dans lequel la partie arrière du séparateur (10) définit une rainure de réception arrière, et une encoche avant (141) est formée dans au moins une de parois gauche et droite de la rainure de réception avant (14), et une encoche arrière (151) correspondant à l'encoche avant (141) est formée dans au moins une de parois gauche et droite de la rainure de réception arrière,
dans lequel le corps de séparateur (11) comprend de préférence :
une plaque verticale (111) ;
une plaque de châssis supérieure (112) disposée à un bord supérieur de la plaque verticale (111) ;
une plaque de châssis inférieure (113) disposée à un bord inférieur de la plaque verticale (111) ;
une plaque gauche (114) disposée à une extrémité gauche de la plaque verticale (111) et définissant une extrémité supérieure connectée à la plaque de châssis supérieure (112) et une extrémité inférieure connectée à la plaque de châssis inférieure (113) ; et
une plaque droite (115) disposée à une extrémité droite de la plaque verticale (111) et définissant une extrémité supérieure connectée à la plaque de châssis supérieure (112) et une extrémité inférieure connectée à la plaque de châssis inférieure (113),
dans lequel chacune des rainures de réception avant et arrière est définie par la plaque verticale (111), la plaque de châssis supérieure (112), la plaque de châssis inférieure (113), la plaque gauche (114) et la plaque droite (115).

3. Module de batterie d'alimentation (1000) selon la revendication 2, dans lequel l'encoche avant (141) est formée dans un bord avant de chacune des plaques gauche et droite (115), et l'encoche arrière (151) est formée dans un bord arrière de chacune des plaques gauche et droite (115).

4. Module de batterie d'alimentation (1000) selon la revendication 2, dans lequel une extrémité gauche de la plaque de châssis supérieure (112) est étendue vers la gauche au-delà de la plaque gauche (114) de façon à former une partie s'étendant vers le haut et la gauche, une extrémité gauche de la plaque de châssis inférieure (113) est étendue vers la gauche au-delà de la plaque gauche (114) de façon à former une partie s'étendant vers le bas et la gauche, une extrémité droite de la plaque de châssis supérieure (112) est étendue vers la droite au-delà de la plaque droite (115) de façon à former une partie s'étendant vers le haut et la droite, et une extrémité droite de la plaque de châssis inférieure (113) est étendue vers la droite au-delà de la plaque droite (115) de façon à former une partie s'étendant vers le bas et la droite,
dans lequel une fente d'enclenchement est formée dans chacune de la partie s'étendant vers le haut et la gauche, la partie s'étendant vers le bas et la gauche, la partie s'étendant vers le haut et la droite et la partie s'étendant vers le bas et la droite.

5. Module de batterie d'alimentation (1000) selon la revendication 4, dans lequel un fermoir supérieur gauche enclenché dans la fente d'enclenchement de la partie s'étendant vers le haut et la gauche et un fermoir inférieur gauche enclenché dans la fente d'enclenchement de la partie s'étendant vers le bas et la gauche sont disposés sur une surface droite du capot gauche (12), et un fermoir supérieur droit enclenché dans la fente d'enclenchement de la partie s'étendant vers le haut et la droite et un fermoir inférieur droit enclenché dans la fente d'enclenchement de la partie s'étendant vers le bas et la droite sont disposés sur une surface gauche du capot droit (13).

6. Module de batterie d'alimentation (1000) selon la revendication 2, dans lequel un cran avant (118) est disposé à un bord latéral avant de chacune des plaques de châssis supérieure et inférieure (113), et un cran arrière (119) est disposé à un bord latéral arrière de chacune des plaques de châssis supérieure (112) et inférieure (113),
dans lequel le cran avant (118) comprend de préférence un premier segment de cran avant (1181) dirigé vers le bas et un second segment de cran avant (1182) dirigé vers le haut, et le cran arrière (119) comprend de préférence un premier segment de cran arrière (1191) dirigé vers le haut et correspondant au premier segment de cran avant (1181) et un second segment de cran arrière (1192) dirigé vers le bas et correspondant au second segment de cran avant (1182).

7. Module de batterie d'alimentation (1000) selon l'une quelconque des revendications 2 à 6, dans lequel une pluralité des encoches avant (141) sont disposées et espacées les unes des autres dans le sens haut-bas, et une pluralité d'encoches arrière (151) sont disposées et espacées les unes des autres dans le sens haut-bas.

8. Module de batterie d'alimentation (1000) selon la revendication 1, dans lequel les séparateurs adjacents (10) sont connectés de manière détachable les uns aux autres au moyen d'une structure d'enclenchement,
dans lequel la structure d'enclenchement comprend de préférence :
une rainure d'enclenchement formée dans l'un des séparateurs adjacents (10) ; et
une languette d'enclenchement disposée sur l'autre des séparateurs adjacents (10) et adaptée pour s'enclencher dans la rainure d'enclenchement pour fixer les séparateurs adjacents (10) ensemble.

9. Module de batterie d'alimentation (1000) selon la revendication 8, dans lequel la partie arrière du séparateur (10) définit une rainure de réception arrière, et la chambre de batterie est définie par la rainure de réception avant (14) de l'un des séparateurs adjacents (10) et la rainure de réception arrière de l'autre des séparateurs adjacents (10),
dans lequel le corps de séparateur (11) comprend de préférence :
une plaque verticale (111) ;
une plaque de châssis supérieure (112) disposée à un bord supérieur de la plaque verticale (111) ;
une plaque de châssis inférieure (113) disposée à un bord inférieur de la plaque verticale (111) ;
une plaque gauche (114) disposée à une extrémité gauche de la plaque verticale (111) et définissant une extrémité supérieure connectée à la plaque de châssis supérieure (112) et une extrémité inférieure connectée à la plaque de châssis inférieure (113) ; et
une plaque droite (115) disposée à une extrémité droite de la plaque verticale (111) et définissant une extrémité supérieure connectée à la plaque de châssis supérieure (112) et une extrémité inférieure connectée à la plaque de châssis inférieure (113),
dans lequel chacune des rainures de réception avant et arrière est définie par la plaque verticale (111), la plaque de châssis supérieure (112), la plaque de châssis inférieure (113), la plaque gauche (114) et la plaque droite (115).

10. Module de batterie d'alimentation (1000) selon la revendication 9, dans lequel la rainure d'enclenchement est formée dans l'un des bords avant et arrière de la plaque de châssis supérieure ou inférieure (113), et la languette d'enclenchement est disposée sur l'autre des bords avant et arrière de la plaque de châssis supérieure ou inférieure (113).
